# EUROPEAN PATENT APPLICATION

(11) **EP 4 671 839 A1**
(43) Date of publication of application: **31.12.2025**
(21) Application number: 25185295.0
(22) Date of filing: 25.06.2025
(51) Int. Cl.: G02B 6/38

(54) **AUTOMATED INSPECTION AND CLEANING OF OPTICAL FIBER COMPONENTS**

(30) Priority: 25.06.2024 US 202463664116 P; 20.11.2024 US 202418953901
(71) Applicant: Microsoft Technology Licensing, LLC, Redmond, WA 98052-6399 (US)
(72) Inventor: ROWSTRON, Antony Ian Taylor, Redmond, 98052-6399 (US); HONG, Tae WOO, Redmond, 98052-6399 (US); WILLIAMS, Hugh David Paul, Redmond, 98052-6399 (US); SWEENEY, David Anthony, Redmond, 98052-6399 (US); CHATZIELEFTHERIOU, Andromachi, Redmond, 98052-6399 (US); HOGG, Elliott Louis, Redmond, 98052-6399 (US); SARANTOPOULOS, Iason, Redmond, 98052-6399 (US); RICHARDSON, David James, Redmond, 98052-6399 (US); BRAGG, William David, Redmond, 98052-6399 (US); SLIFE, Anthony Donald, Redmond, 98052-6399 (US); CRICHTON, Christopher Winfield, Redmond, 98052-6399 (US)
(74) Representative: Page White Farrer

(57) **Abstract**

Robotic systems and methods for operating a robotic system to perform inspection and cleaning of optical fiber components are disclosed. A robotic system for performing automated inspection and cleaning of optical fiber components comprises a transceiver receptacle moveably secured to a chassis and configured to removably retain an optical fiber transceiver, and a connector adapter moveably secured to the chassis and configured to removably retain an optical fiber connector. An inspection tool is moveably secured to the chassis and configured to inspect one or more fiber ends of the optical fiber connector and one or more fiber ends of the optical fiber transceiver. A cleaning tool is moveably secured to the chassis and configured to clean the fiber ends of the optical fiber connector and the fiber ends of the optical fiber transceiver.

## Description

### CROSS REFERENCE TO RELATED APPLICATIONS

This application claims priority to U.S. Provisional Application Serial No. 63/664,116, filed June 25, 2024, the entirety of which is hereby incorporated herein by reference for all purposes.

### BACKGROUND

Optical fiber connectors and transceivers are available in many different configurations and form factors. Inspection and cleaning of optical surfaces in these components can improve data transmission efficiencies and reduce downtime.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Examples are disclosed and further described below that relate to automated inspection and cleaning of optical fiber components. In one example and as described below, a robotic system for performing automated inspection and cleaning of optical fiber components comprises a transceiver receptacle moveably secured to a chassis and configured to removably retain an optical fiber transceiver, and a connector adapter moveably secured to the chassis and configured to removably retain an optical fiber connector. An inspection tool is moveably secured to the chassis and configured to inspect one or more fiber ends of the optical fiber connector and one or more fiber ends of the optical fiber transceiver. A cleaning tool is moveably secured to the chassis and configured to clean the fiber end(s) of the optical fiber connector and the fiber end(s) of the optical fiber transceiver.

### BRIEF DESCRIPTION OF THE DRAWINGS

FIG. 1 shows a front view of one example of a robotic system for automated inspection and cleaning of optical fiber components, along with a first configuration of optical fiber connector and first configuration of optical fiber transceiver, according to the present disclosure.
FIG. 2 shows the first configuration of optical fiber connector seated in the first configuration of optical fiber transceiver, the transceiver seated in a transceiver receptacle of the robotic system of FIG. 1, along with a second configuration of optical fiber connector and second configuration of optical fiber transceiver.
FIG. 3 shows the upper surface of the optical fiber connector contacting a clamping surface of a clamp of the robotic system.
FIG. 4 shows a foot of the clamp contacting the lower surface of the optical fiber connector.
FIG. 5 shows the clamp moved in the negative Y-axis direction to remove the optical fiber connector from the optical fiber transceiver.
FIG. 6 shows the optical fiber transceiver and connector adapter translated in the negative Z-axis direction to align the optical fiber connector with a fiber receiving opening of the connector adapter.
FIG. 7 shows the clamp moving in the positive Y-axis direction to insert the optical fiber connector into the fiber receiving opening to seat the optical fiber connector in the connector adapter.
FIG. 8 shows another view of the optical fiber connector inserted into the connector adapter with the transceiver and transceiver receptacle in a loading orientation.
FIG. 9 shows the optical fiber transceiver rotated from the loading orientation to a servicing orientation.
FIG. 10 shows a tool positioning mechanism of the robotic system that moves the inspection tool and cleaning tools along the X-axis and Y-axis.
FIG. 11 shows the probe tip of the inspection tool approaching an MPO transceiver fiber receiving opening of the optical fiber transceiver.
FIG. 12 shows another view of the probe tip approaching the transceiver fiber receiving opening of the optical fiber transceiver.
FIG. 13 shows the inspection tool tilted to form a downward angle with respect to the optical plane and Y-axis.
FIG. 14 shows the inspection tool tilting mechanism of the robotic system.
FIG. 15 shows the first cleaning tip of the first cleaning tool approaching the MPO transceiver fiber receiving opening of the first configuration of transceiver.
FIG. 16 shows the inspection tool being positioned to inspect a fiber end on the end face of the first configuration of optical fiber connector.
FIG. 17 shows the inspection tool tilted to form an upward angle with respect to the optical plane and Y-axis.
FIG. 18 shows the first cleaning tip of the first cleaning tool inserted into an instrument receiving opening of the connector adapter to contact the fiber ends of the first configuration of optical fiber transceiver.
FIG. 19 shows the first cleaning tip of the first cleaning tool approaching the fiber ends of the first configuration of optical fiber connector, along with a depiction of the second configuration of optical fiber connector positioned for cleaning by the first cleaning tool.
FIG. 20 shows the second cleaning tool inserted one of the two transceiver fiber receiving opening of the second configuration of optical fiber transceiver to contact and clean the two fiber ends inside the transceiver.
FIGS. 21A-21C are a flow chart of a method for operating a robotic system to perform inspection and cleaning of an optical fiber connector and an optical fiber transceiver according to examples of the present disclosure.
FIG. 22 is a flow chart of another method for operating a robotic system to perform inspection and cleaning of optical fiber components according to examples of the present disclosure.
FIG. 23 shows a block diagram of an example computing system according to examples of the present disclosure.

### DETAILED DESCRIPTION

Inspection and cleaning of optical surfaces in optical fiber components during manufacturing and in the field can improve data transmission efficiencies and reduce downtime. For example, inspection tools in the form of hand-held microscopes can be utilized to manually inspect optical surfaces on the end-face of optical fiber connectors and on the mating face of a transceiver for contaminants or blemishes. Optical fiber cleaning tools can be used to clean these optical surfaces.

Many existing optical fiber inspection and cleaning tools are manually operated and require separate adapters with mechanical alignment features between the inspection tool and the different configurations of optical fiber connectors and transceivers. Positioning these manually operated tools requires contact between the tool and the optical fiber connector or transceiver. Further, when cleaning an optical fiber connector or transceiver, a technician will often pick up different tools and move about, which increases the chances of introducing contaminants into the optical fiber component. Accordingly, current manual inspection and cleaning processes can be time-consuming and create opportunities for inadvertent damage and introduction of contaminants into the components.

For example, the process of selecting and manually installing the proper adapter on an inspection tool, handling an optical fiber transceiver, removing an optical fiber connector from the transceiver, and aligning an inspection tool with an optical surface of the optical fiber connector to capture inspection images of the surface can be quite time-consuming. Additionally, in examples of optical fiber connectors and transceivers that accommodate multiple optical fibers, during inspection a technician is required to individually inspect each optical surface by separately positioning, aligning, and imaging each optical surface with the inspection tool. The manual handling of the tool, adapter, transceiver, and optical fiber connector along with the physical contact between the tool and the optical fiber connector and transceiver also can result in damage and/or the introduction of dust or other contaminants. Further, because of the wide variety of optical fiber connectors and transceivers having many different configurations and form factors, a unique and separate adapter is required for inspecting and cleaning each different configuration of connector and transceiver.

Accordingly and as described in more detail below, the present disclosure describes robotic systems and corresponding methods that perform automated inspection and cleaning of a variety of different optical fiber components, including automated disassembly and reassembly of optical fiber connectors and corresponding transceivers. Advantageously, utilizing the systems of the present disclosure to perform inspection and cleaning greatly increases the speed and quality of such processes and reduces the likelihood of introducing external contaminants into the components, thereby avoiding the disadvantages and risks described above. Additionally, in different use cases and as described further below, systems of the present disclosure can receive a transceiver with inserted optical fiber connector as an assembled unit, remove the optical fiber connector from the transceiver and insert the optical fiber connector into a connector adapter for inspection and cleaning, and then remove the connector from the adapter and insert the cleaned optical fiber connector into the transceiver. In other examples, a transceiver without a an optical fiber connector can be manually inserted into a transceiver receptacle for inspection and cleaning. In some examples, an optical fiber connector can be manually inserted into the connector adapter for inspection and cleaning.

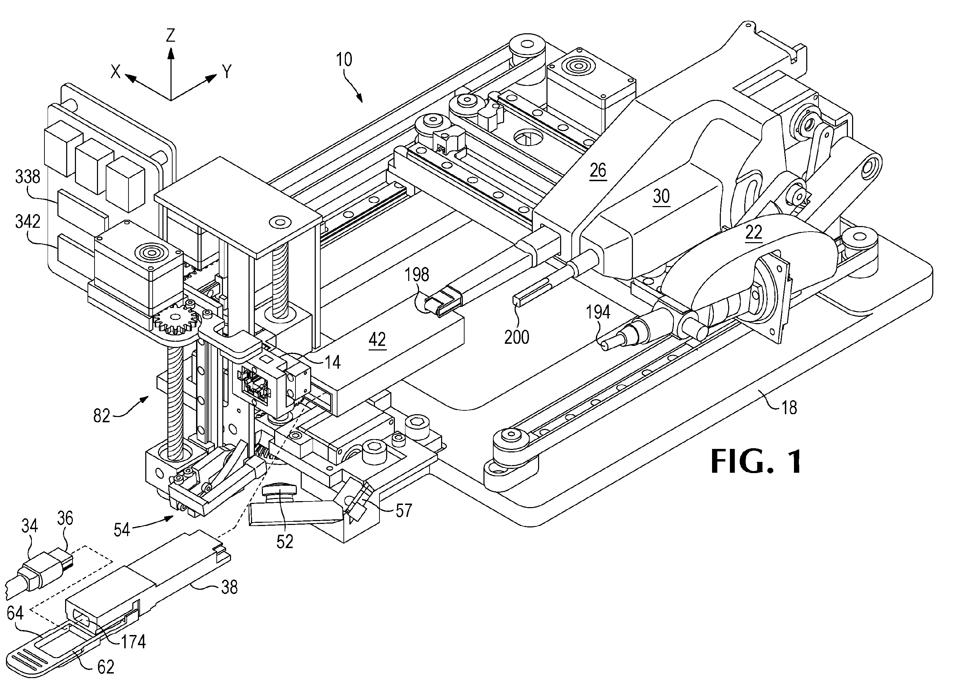

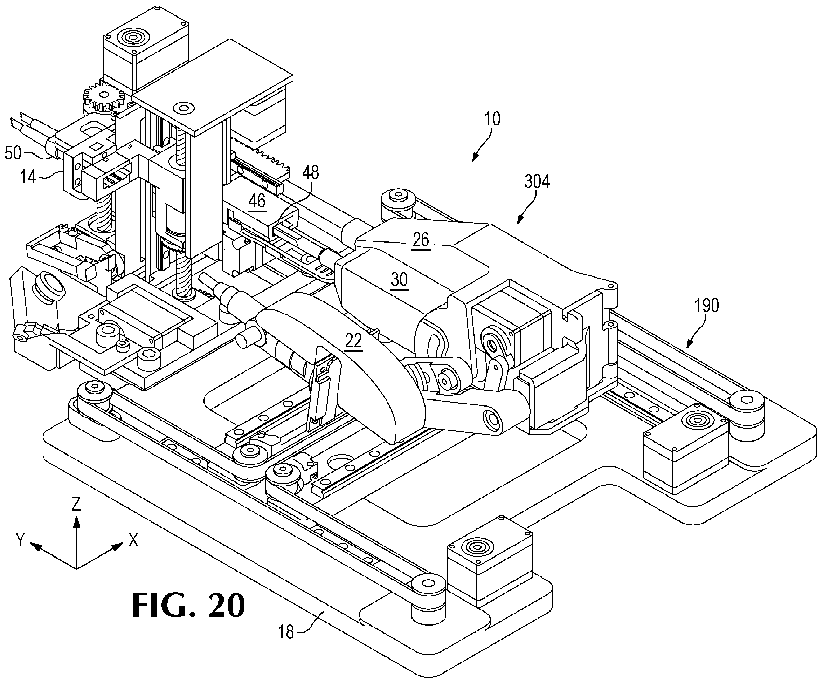

FIGS. 1-20 show one example of a robotic system 10 for performing automated inspection and cleaning of optical fiber components. As described in more detail below and in different use cases, system 10 is configured to inspect a fiber end of an optical fiber component by moving an inspection tool to a position close to an end or mating face of the optical fiber component. A cleaning tool of system 10 is then moved to contact the fiber end of the optical fiber component to clean the fiber end of the component. In some examples, operation of system 10 can be managed and controlled by software services running in a cloud environment, such as via a services API. As described further below, system 10 includes at least one processor and memory storing instructions executable by the processor to control the motors, mechanisms, and other components of the system to perform automated inspection and cleaning of optical fiber components.

In some examples robotic system 10 comprises an enclosure (not shown in FIGS. 1-10 and 12-20) that contains the components described herein. In different embodiments the system 10 and enclosure can be worn or held by a human user, such as worn as a body-mounted unit, mounted on a fixed structure such as a table, mounted to a separate robotic system, or utilized in other manners.

In the present example and as described in more detail below, the system 10 is configured to perform inspection and cleaning services for optical fiber connectors and transceivers having a plurality of configurations and in a variety of different use cases. The present examples are described with respect to optical fiber transceivers in the forms of quad small form-factor pluggable (QSFP) transceivers having either Multifiber Push On (MPO) or Lucent Connector (LC) configurations, and corresponding optical fiber connectors having either MPO or LC configurations. It will be appreciated that the principles of the present disclosure can be utilized with a variety of other configurations of optical fiber connectors and transceivers having different form factors, capabilities, components, and/or other features.

In the present example and as described further below, system 10 includes a connector adapter 14 moveably secured to a chassis 18 of the system 10 and configured to removably retain a plurality of configurations of optical fiber connectors. As noted above, in the present example connector adapter 14 is configured to receive and secure both LC and MPO configurations of optical fiber connectors. The principles of the present disclosure can be utilized with other configurations of connector adapters that receive and secure other types, combinations, and configurations of optical fiber connectors having different form factors, capabilities, components, and/or other features.

As described further below, system 10 includes an inspection tool 22 moveably secured to chassis 18 and configured to inspect a fiber end of an optical fiber connector and a fiber end of an optical fiber transceiver. System 10 further includes a first cleaning tool 26 that is moveably secured to chassis 18 and configured to clean the fiber end of a first configuration of optical fiber connector, such as an MPO connector. Additionally, as described further below and in another potential advantage of the present disclosure, first cleaning tool 26 is configured to also clean the fiber end of a second configuration of optical fiber connector, such as an LC optical fiber connector, thereby potentially providing an improved cleaning performance as compared to a second configuration of cleaning tool and/or reducing a necessary range of motion of the cleaning tools to enable a smaller footprint of system 10. In the present example, first cleaning tool 26 also is configured to clean the fiber end of an MPO optical fiber transceiver. In the present example, system 10 also comprises a second configuration of cleaning tool 30 moveably secured to the chassis and configured to clean a fiber end of a second configuration of optical fiber transceiver, such as an LC transceiver.

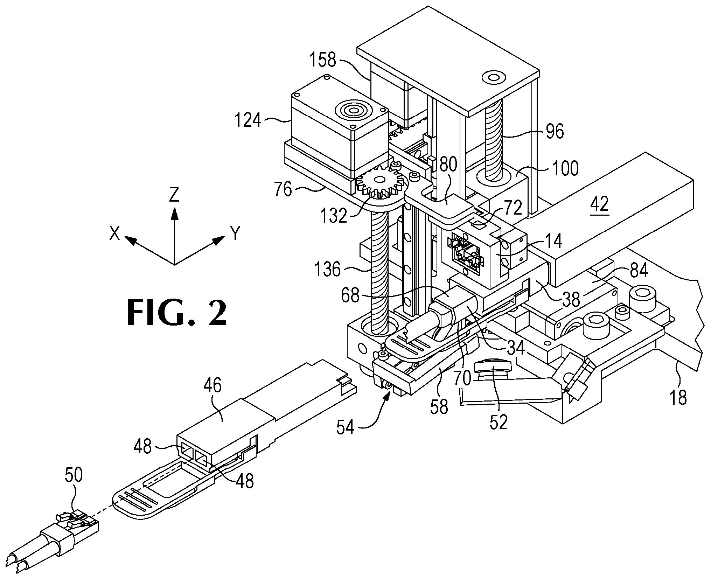

FIG. 1 illustrates system 10 and an MPO optical fiber connector 34 and corresponding MPO optical fiber transceiver 38. In this figure, transceiver receptacle 42 is shown in a loading orientation at which the optical fiber transceiver 38 (and in some examples seated MPO optical fiber connector 34) can be inserted and removably retained in the receptacle. With reference to FIG. 2 and as noted above, transceiver receptacle 42 is also configured to removably retain another configuration of optical fiber transceiver 46 that accepts LC optical fiber connectors 50.

As described further below, and in another potential advantage of the present disclosure, system 10 includes a moveable clamp, multiple positioning mechanisms, and other components that provide automated handling, inspection, and cleaning of optical fiber connectors and transceivers. In the present example, system 10 also includes an identification camera 52 positioned to capture images of an optical fiber connector in the connector adapter 14 and an optical fiber transceiver seated in the transceiver receptacle 42. As described in more detail below, system 10 also includes a processor and memory storing instructions executable by the processor to use at least one image from the identification camera to identify a configuration of an optical fiber connector and/or a configuration of an optical fiber transceiver. Using the identified configuration of the optical fiber connector and/or the identified configuration of the optical fiber transceiver, coordinates are retrieved from the memory and utilized to guide movements of the moveable clamp, inspection tool 22, and cleaning tools 26 and/or 30.

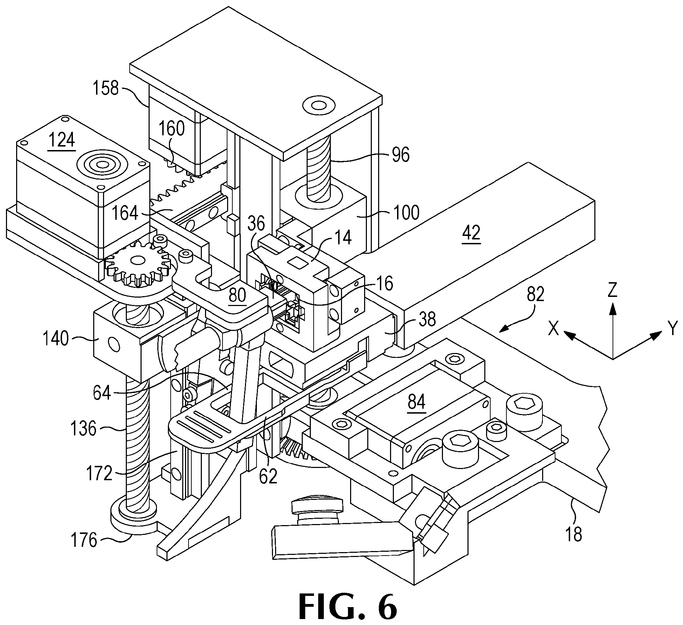

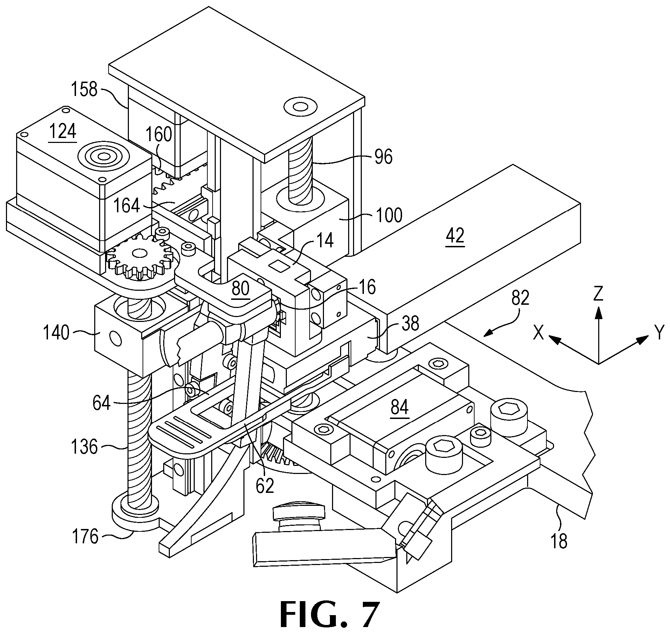

With reference now to FIGS. 2-8, system 10 includes a moveable clamp 54 configured to remove optical fiber connector 34 from the optical fiber transceiver 38 retained in the transceiver receptacle 42 and insert the optical fiber connector into the connector adapter 14. In this example and as described further below, moveable clamp 54 comprises an arm 58 configured to extend between a first pull tab arm 62 and second pull tab arm 64 of an optical fiber transceiver (see FIGS. 6 and 7). Advantageously, this configuration enables the moveable clamp 54 to remove optical fiber connector 34 from the optical fiber transceiver 38 and insert the optical fiber connector into the connector adapter 14. Further, this configuration allows the moveable clamp to access and manipulate a variety of configurations of optical fiber connectors retained in a variety of configurations of transceivers.

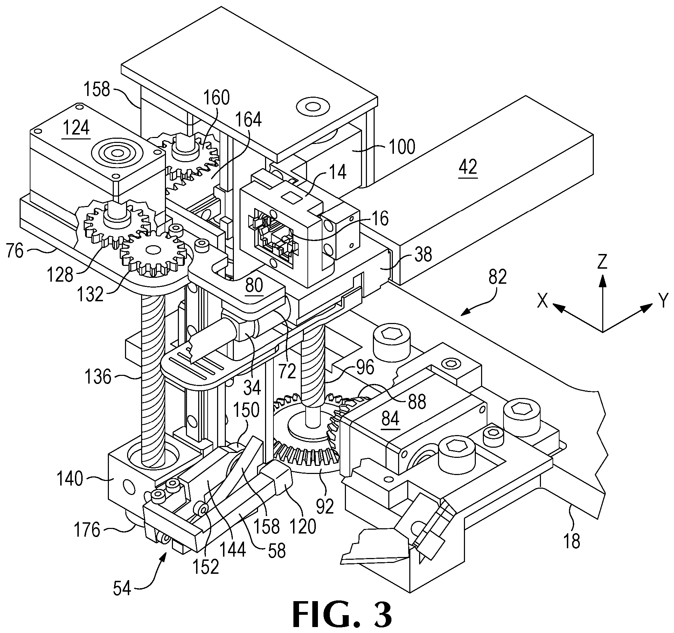

FIG. 2 shows transceiver receptacle 42 in a loading orientation at which transceiver 38 is inserted into the receptacle. With reference also to FIG. 3 and from the loading orientation, the transceiver receptacle 42, inserted transceiver 38 and optical fiber connecter 34 are translated in the Z-axis direction until an upper surface 68 of the optical fiber connector contacts a clamping surface 72 of the clamp 54 that is affixed to a clamp platform 76 via clamp extension 80. To effect this movement, a transceiver/adapter positioning mechanism 82 comprises a transceiver/adapter motor 84 and attached transceiver/adapter motor bevel gear 88 that drive a transceiver/adapter leadscrew bevel gear 92 affixed to a transceiver/adapter leadscrew 96 to rotate the transceiver/adapter leadscrew.

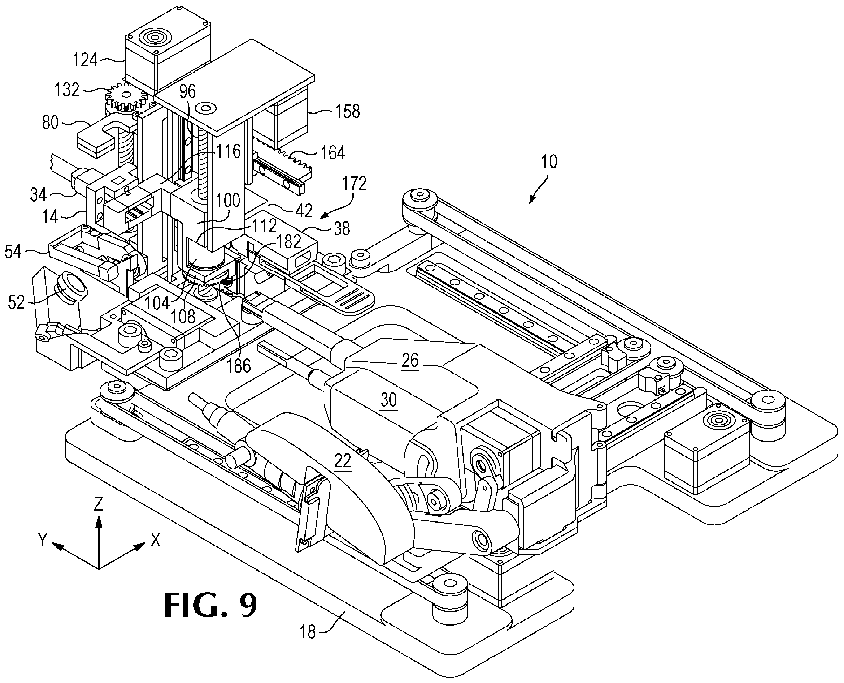

Rotation of the transceiver/adapter leadscrew 96 causes a transceiver/adapter nut guide 100 to translate in the Z-axis direction. With reference also to FIG. 9 and as described further below, a cylinder 104 affixed to the transceiver receptacle 42 encircles and is rotatably and slidably coupled to the transceiver/adapter leadscrew 96. Cylinder 104 is captured between bracket 108 and opposing surface 112 of the transceiver/adapter nut guide 100. Connector adapter 14 is fixedly secured to the transceiver/adapter nut guide 100 via connector adapter bracket 116. In this manner, translation of the transceiver/adapter nut guide 100 also translates the connector adapter 14 and transceiver receptacle 42 in the positive or negative Z-axis direction.

With reference now to FIGS. 2-4, with the upper surface 68 of the optical fiber connector 34 contacting the clamping surface 72 of the clamp 54, clamp arm 58 is rotated and translated in the positive Z-axis direction until a foot 120 at a distal end of the arm contacts a lower surface 70 of the optical fiber connector and squeezes the optical fiber connector between the foot and the clamping surface 72. To effect this movement, a clamp motor 124 and attached clamp motor gear 128 drive a clamp leadscrew gear 132 affixed to a clamp leadscrew 136 to rotate the clamp leadscrew. Rotation of the clamp leadscrew 136 causes a clamp nut guide 140 to translate in the Z-axis direction.

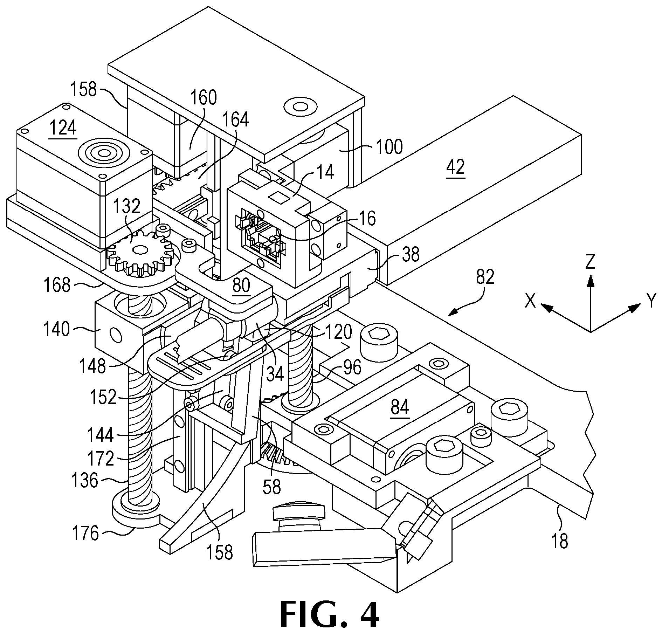

As best seen in FIGS. 3 and 4, a clamp bracket 144 of clamp 54 is rotatably attached to a carriage plate 148 of the clamp nut guide 140. Clamp bracket 144 and attached arm 58 are biased to rotate about a proximal end 150 of the clamp bracket 144 in a counter-clockwise direction by a biasing element, such as a leaf spring or coil spring (not shown). In the position shown in FIG. 3, a guide pin 152 engaging a ramp surface 156 locates the arm 58 in a relatively horizontal position along the Y-axis.

With reference to FIG. 4, as the clamp nut guide 140 is translated in the positive Z-axis direction, the ramp surface 156 guides the foot 120 of arm 58 to rotate upwardly towards the Z-axis and travel between first pull tab arm 62 and second pull tab arm 64 of the transceiver 38 until foot 120 contacts the lower surface 70 of the optical fiber connector and squeezes the optical fiber connector between the foot and the clamping surface 72.

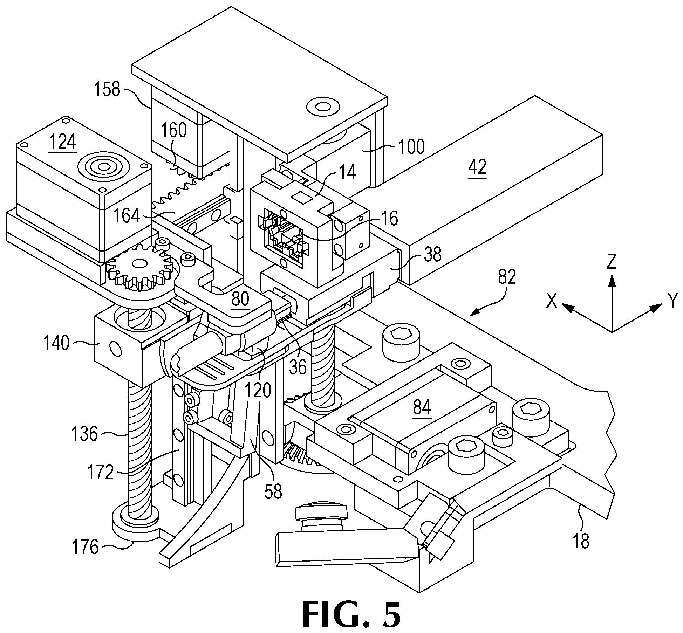

Next, the clamp 54 is moved in the negative Y-axis direction to remove the optical fiber connector 34 from the optical fiber transceiver 38 and insert the optical fiber connector into the connector adapter 14. To accomplish this movement and with reference also to FIG. 5, system 10 includes a front end motor 158 and attached front end gear 160 that drives a front end rack 164 in the Y-axis direction. A first platform 168 is affixed to the front end rack 164 and mounts the clamp motor 124 and clamp extension 80 of the clamp 54. Clamp leadscrew 136 extends through the first platform 168. A guide bar 172 extends from the first platform 168 to a second platform 176 to which the clamp leadscrew 136 is rotatably coupled and the ramp surface 156 is affixed.

As shown in FIG. 5, front end motor 158 moves front end rack 164 and the attached clamp extension 80 and foot 120 of arm 58 in the negative Y-axis direction to unplug the optical fiber connector 34 from the transceiver 38. Next and with reference to FIG. 6, the transceiver/adapter motor 84 translates the transceiver 38 and connector adapter 14 in the negative Z-axis direction to align the end face of optical fiber connector 34 with the fiber receiving opening 16 of the connector adapter. As shown in FIG. 6, arm 58 extends through the first pull tab arm 62 and second pull tab arm 64 of the optical fiber transceiver 38, thereby enabling this translation and repositioning of the transceiver and the connector adapter 14. In one potential advantage of the present disclosure, this configuration enables the clamp arm 58 to access and engage with a variety of configurations of optical fiber connectors held in a variety of configurations of transceivers that can have different form factors and positionings of components.

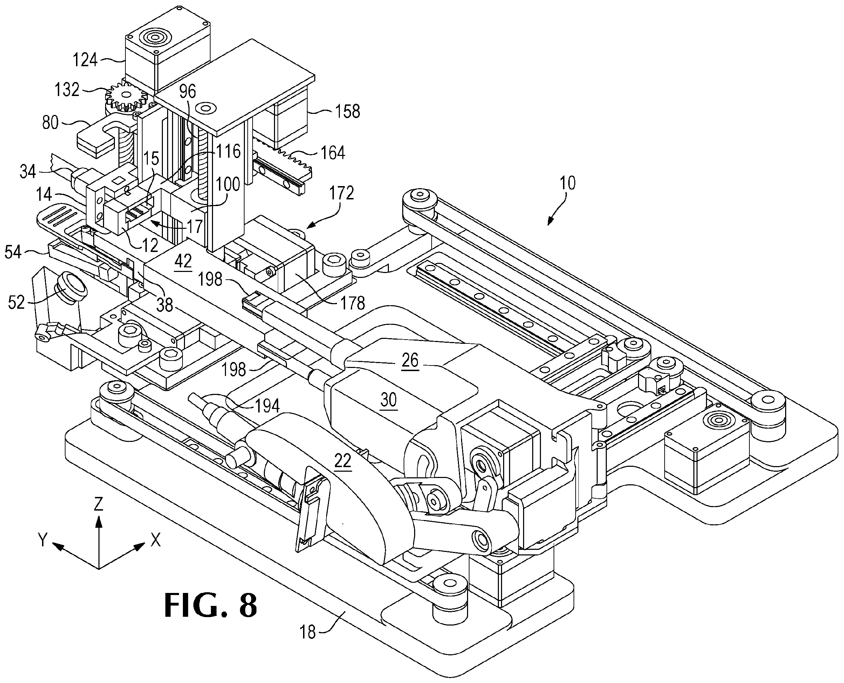

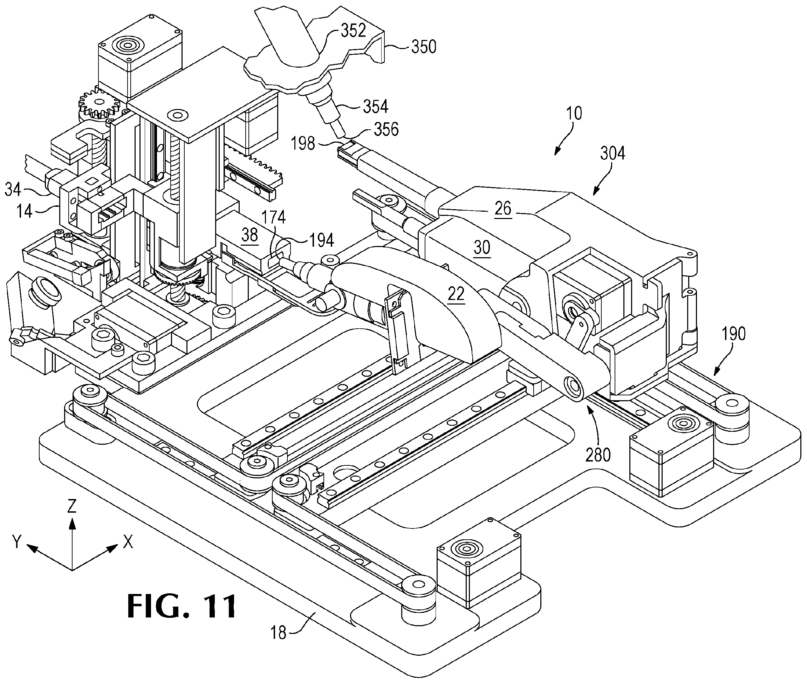

With reference now to FIG. 7, the front-end motor 158 then moves the clamp extension 80 and foot 120 of arm 58 in the positive Y-axis direction to insert the optical fiber connector 34 into the fiber receiving opening to seat the optical fiber connector in the connector adapter 14. FIG. 8 shows another view of the optical fiber connector 34 inserted into the connector adapter 14, with the transceiver 38 and transceiver receptacle 42 still in the loading orientation. With reference now to FIG. 9, system 10 includes a transceiver rotating mechanism 172 configured to rotate the optical fiber transceiver 38 from the loading orientation to a servicing orientation illustrated in FIG. 9. As illustrated in FIG. 11, in the servicing orientation the MPO transceiver fiber receiving opening 174 is facing the inspection tool 22, first cleaning tool 26, and second cleaning tool 30.

With reference to FIGS. 8 and 9 and as noted above, the transceiver receptacle 42 is affixed to cylinder 104 that encircles and is rotatably and slidably coupled to the transceiver/adapter leadscrew 96. As shown in FIG. 9, transceiver rotating mechanism 172 comprises a transceiver rotating motor 178 and attached transceiver rotating motor bevel gear 182 that drive a transceiver rotating bevel gear 186 fixedly coupled to the cylinder 104 to rotate the cylinder and attached transceiver receptacle 42 and transceiver 38.

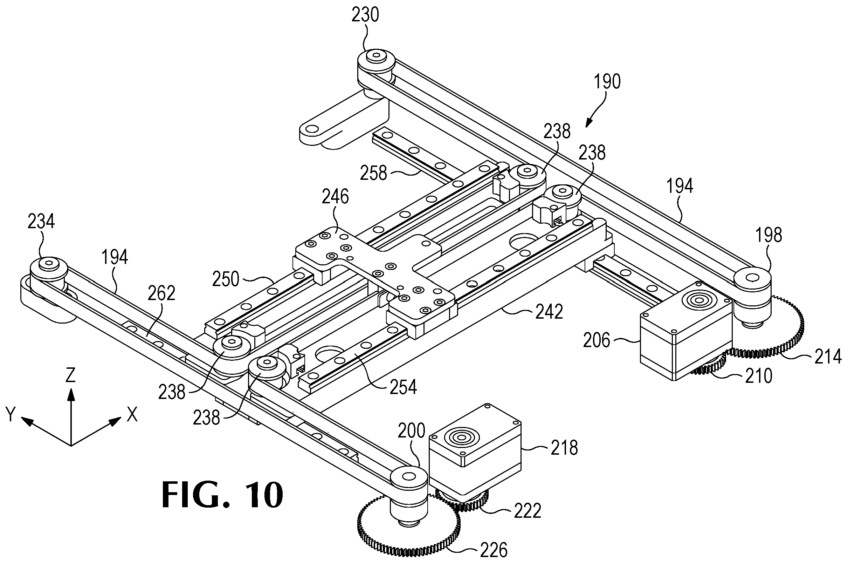

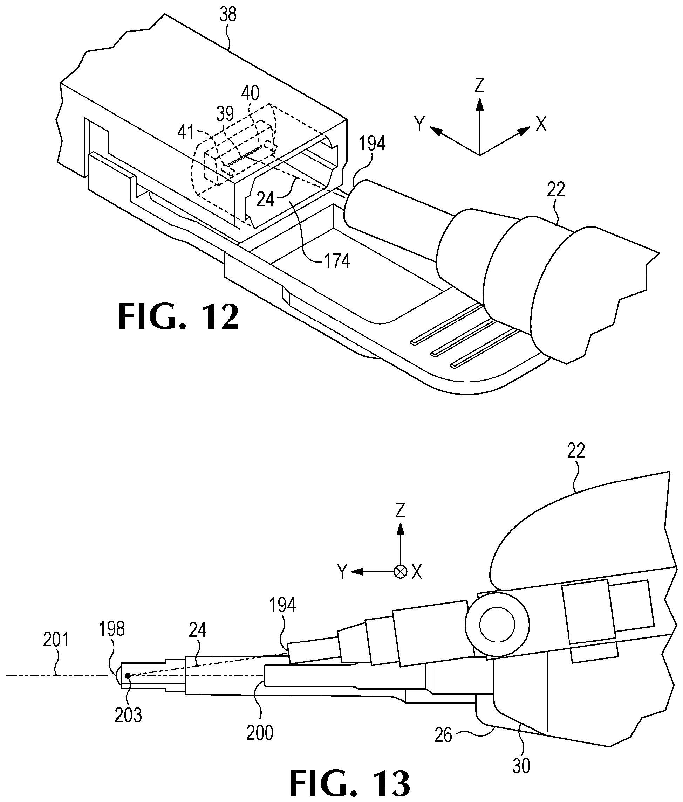

To perform inspection and cleaning of optical fiber connectors and/or transceivers, and with reference to FIGS. 1 and 10, the inspection tool 22, first cleaning tool 26, and second cleaning tool 30 are mounted to a tool positioning mechanism 190 that moves the inspection tool and cleaning tools with two degrees of freedom along the X-axis and Y-axis. As described further below and in one potential advantage of the present disclosure, the tool positioning mechanism 190 restricts the inspection tool and the cleaning tools to movement in a first direction and a second direction orthogonal to the first direction. More particularly and in the present example, with reference to FIG. 13 the tool positioning mechanism 190 restricts a probe tip 194 of the inspection tool 22, a first cleaning tip 198 of the first cleaning tool 26, and a second cleaning tip 200 of the second cleaning tool 30 to moving in the first direction and the second direction along an optical plane 201 in the X-axis and Y-axis.

Additionally, and as described further below, system 10 operates the transceiver/adapter positioning mechanism 82 described above to selectively position either the transceiver 38 in transceiver receptacle 42 or the optical fiber connector 34 in connector adapter 34 at the optical plane 201 for inspection and cleaning. Advantageously, this configuration enables precise positioning of the probe tip 194 of inspection tool 22, first cleaning tip 198 of first cleaning tool 26, and second cleaning tip 200 of second cleaning tool 30, while also enabling implementation of a two degree-of-freedom tool positioning mechanism 190 for movement of the inspection and cleaning tools which enables a smaller form factor and corresponding footprint for the system 10.

With reference to FIGS. 9 and 10, one example of a tool positioning mechanism 190 according to aspects of the present disclosure is illustrated. In this example, tool positioning mechanism 190 comprises an H-bot mechanism in which a single H-shaped circumferential timing belt 202 connects a first driven pulley 204 and second driven pulley 206. A first tool positioning motor 208 drives a first driving tool positioning gear 210 that drives a first driven tool positioning gear 214 connected to the first driven pulley 204. Similarly, a second tool positioning motor 218 drives a second driving tool positioning gear 222 that drives a second driven tool positioning gear 226 connected to the second driven pulley 206.

In this example the timing belt 202 extends around a first idler pulley 230 spaced from the first driven pulley 204 and a second idler pulley 234 spaced from the second driven pulley 206. Timing belt 202 also extends around four idler pulleys 238 rotatably coupled to a tool assembly platform 242. A moveable tool base 246 is slidably coupled to the tool assembly platform 242 for movement along the X-axis direction at a first rail 250 and a second rail 254. Inspection tool 22, first cleaning tool 26, and second cleaning tool 30 are mounted to the moveable base 246. First rail 250 and second rail 254 are slidably coupled to a third rail 258 and fourth rail 262 extending in the Y-axis direction. In this manner and by selectively operating first tool positioning motor 208 and second tool positioning motor 218, inspection tool 22, first cleaning tool 26, and second cleaning tool 30 can be moved along the X-axis and Y-axis for precise positioning relative to the optical fiber connector and transceiver for inspection and cleaning services.

As noted above, the tool positioning mechanism 190 restricts movement of probe tip 194 of the inspection tool 22, first cleaning tip 198 of the first cleaning tool 26, and second cleaning tip 200 of the second cleaning tool 30 to movement in the X-Y axes along optical plane 201. Additionally, the transceiver/adapter positioning mechanism 82 described above is operated to selectively position either the transceiver 38 or the optical fiber connector 34 at optical plane 201 for inspection and cleaning. In one example, after rotating the transceiver 38 to the servicing position of FIG. 9, the transceiver/adapter positioning mechanism 82 translates the transceiver (and connector adapter 14 and attached optical fiber connector 34) along the Z-axis to locate the MPO transceiver fiber receiving opening 174 in the optical plane 201.

With the optical fiber transceiver 38 positioned in the servicing orientation and in the optical plane 201, tool positioning mechanism 190 moves the inspection tool 22 along the X-Y axes to visually inspect a fiber end 39 (core) on the mating face 40 of the optical fiber transceiver 38 held inside transceiver receptacle 42. FIGS. 11 and 12 depict the probe tip 194 of the inspection tool 22 approaching an MPO transceiver fiber receiving opening 174 of the optical fiber transceiver 38. In one potential advantage of the present disclosure, the tool positioning mechanism 190 is operated to position the probe tip 194 of the inspection tool 22 near the mating face 40 of the optical fiber transceiver 38 to inspect a fiber end 39 without contacting another surface, such as a surface interior to the MPO transceiver fiber receiving opening 174. Advantageously, by operating the inspection tool 22 to inspect a fiber end 39 without contacting another surface, system 10 avoids introducing dust or other contaminants through contact with another surface near the fiber end.

In the present example, optical fiber transceiver 38 is an MPO transceiver that includes 12 optical fibers and 12 corresponding optical fiber ends 39. In other examples, MPO transceivers can utilize 8, 24, and other quantities of optical fibers and corresponding optical fiber ends. In this example, the tool positioning mechanism 190 moves the probe tip 194 of the inspection tool 22 along the optical plane 201 in the X-axis direction, stopping at each optical fiber end 39 to inspect the optical fiber end. In some examples, the tool positioning mechanism 190 and/or transceiver/adapter positioning mechanism 82 adjusts the position of the probe tip 194 to capture an accurate image of a fiber end 39.

In some examples, a camera of inspection tool 22 captures one or more images of a fiber end 39 and analyzes the image(s) to detect the core of the fiber end. Once a focused image of the core has been obtained, the image can be partitioned into multiple regions, and each region can be processed to detect anomalies that correspond to dirt, dust, or other contaminants or defects. In some examples system 10 runs a classification algorithm stored in memory to detect the number of anomalies in a specific region of the core, which number is compared to one or more thresholds to determine whether the region passes or fails the inspection. Where all regions pass inspection, cleaning the examined fiber end 39 is not necessary. In other examples, other methods for utilizing an inspection tool to inspect a fiber end 39 for anomalies can be utilized.

Advantageously and in some examples, when the camera of the inspection tool 22 has been properly positioned in the Y-axis direction to focus on one fiber end 39, the inspection tool 22 can be quickly moved laterally in only the X-axis direction to sequentially focus on and inspect each of the other laterally-aligned fiber ends 39.

Additionally, in another potential advantage of the present disclosure, because system 10 provides three axes of positioning between the inspection tool 22 and the fiber ends 39, the system can be utilized to perform three-dimensional inspection of a fiber end. In the present example, tool positioning mechanism 190 can move the inspection tool 22 along the X- and Y-axes of motion, and the transceiver/adapter positioning mechanism 82 can move the optical fiber transceiver 38 (and optical fiber connector 34) on the Z-axis of motion. Advantageously and in this manner, three-dimensional inspection of a fiber end 39 can be performed and utilized in a variety of manners. Examples include identifying whether an anomaly is a chip, pit, mound or other damage to a fiber end, determining the depth of a chip in a fiber end, such as a lens, a precise location of the anomaly, and/or other characteristics and features of anomalies. Additionally and as described further below, three-dimensional inspection of a fiber end also enables reach diagnostics that can be used for a variety of purposes, such as determining causes of failure and developing targeted repair plans.

In some examples of optical fiber connectors, such as some configurations of MPO optical fiber connectors, the end face of the optical fiber connector on which the fiber ends are located is angled with respect to the vertical (in the present example, the Z-axis). For example, an MPO optical fiber connector can have an end face that is angled by 8 degrees relative to the vertical. For these optical fiber connectors, corresponding MPO transceivers have a mating face on which mating fiber ends are located, with such mating face being angled by 8 degrees in the opposite direction from the vertical. In this manner, when the optical fiber connector is inserted into the transceiver, the optical fiber connector end face and transceiver mating face will be parallel and flush against one another to securely align and mate their respective fiber ends.

With reference again to FIGS. 11 and 12, in this example the mating face 40 of the optical fiber transceiver 38 is angled by 8 degrees with respect to the Z-axis to accommodate an end face 36 of the optical fiber connector 34 that is angled by 8 degrees in the opposite direction as described further below. In another potential advantage of the present disclosure, to facilitate accurate imaging of the fiber ends 39 on the angled mating face 40, system 10 includes an inspection tool tilting mechanism 280 connected to the inspection tool 22 and mounted to the tool positioning mechanism 190. Advantageously, the inspection tool tilting mechanism 280 is configured to tilt the inspection tool 22 and probe tip 194 relative to the mating face 40 of the optical fiber transceiver 38, while also maintaining the probe tip on the optical plane 201.

More particularly, in this example the inspection tool tilting mechanism 280 is controlled to tilt the inspection tool 22 until an optical axis 24 of the inspection tool is perpendicular to the mating face 40 of the optical fiber transceiver 38. With reference to FIG. 13, in this position the optical axis 24 of the inspection tool 22 forms an angle with respect to the optical plane 201 and Y-axis of approximately 8 degrees away from the Z-axis. In this manner, light exiting probe tip 194 of the inspection tool 22 impinges upon each fiber end 39 at a 90-degree angle to maximize reflection of light back into the probe tip. Additionally, and as described further below, when the inspection tool tilting mechanism 280 tilts the inspection tool 22, the tool and probe tip 194 are also moved in the Y-axis and Z-axis directions to maintain the focal point 203 of the inspection tool camera at a virtual pivot point 203on optical plane 201, and thereby maintain a fixed focal point 203 of the inspection tool camera as the tool pivots.

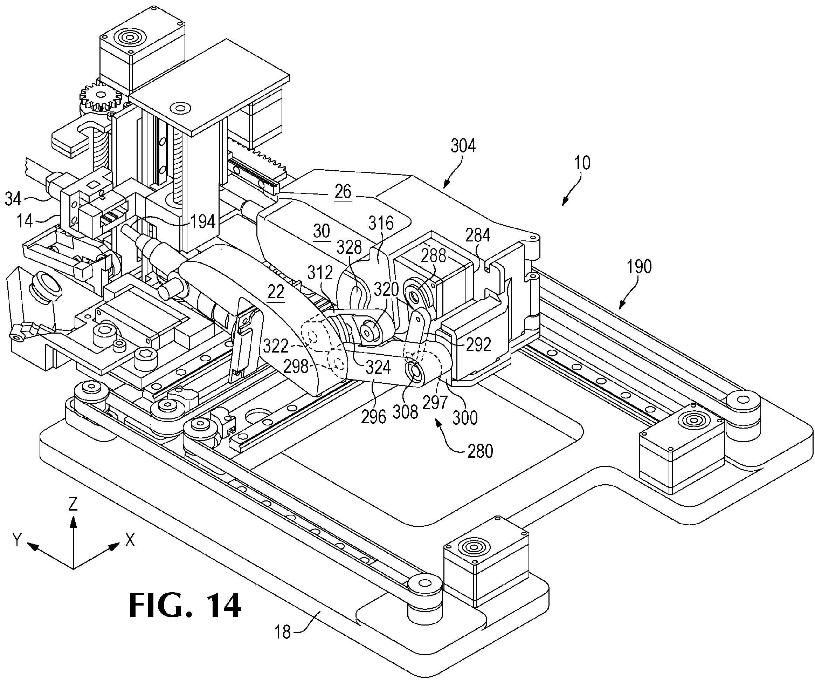

With reference now to FIG. 14 in this example inspection tool tilting mechanism 280 comprises a tool tilting motor 284 coupled to a linkage comprising a first arm 288 rotatably coupled to a second arm 292. The second arm 292 is rotatably coupled to a third arm 296 at a first pin 297. The third arm 296 is rotatably coupled to inspection tool 22 at a second pin 298 at a distal end of the third arm, and rotatably coupled to a rear plate 300 of a cleaning tool housing 304 via third pin 308. A fourth arm 312 is rotatably coupled to a side wall 316 of the cleaning tool housing 304 at a proximal end of the fourth arm at a fourth pin 320, and is rotatably coupled to a fifth pin 322 spaced from the second pin 298 in the Y-axis direction on inspection tool 22. A follower pin 324 extends laterally from fourth arm 312 into an arcuate slot 328 defined in the sidewall 316 of the cleaning tool housing 304. In this manner, inspection tool tilting mechanism 280 can be controlled to tilt the inspection tool 22, probe tip 194 and optical axis 24 to selectively adjust the optical axis 24 while also maintaining a fixed focal point 203 of the inspection tool camera on the optical plane 201 as the tool pivots.

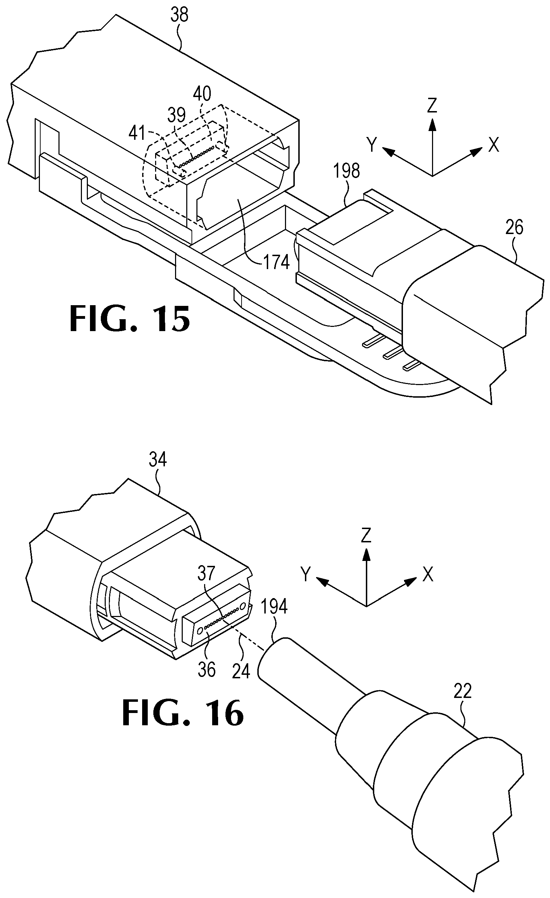

Where inspection of a fiber end determines that cleaning of the fiber end is warranted, the tool positioning mechanism 190 is operated to move the first cleaning tool 26 to contact the fiber end of the optical fiber transceiver 38. In the present example and as noted above, first cleaning tool 26 is configured to clean fiber ends of MPO transceivers and optical fiber connectors. More particularly and with reference now to FIG. 15, the tool positioning mechanism 190 inserts the first cleaning tip 198 of the first cleaning tool 26 into the MPO transceiver fiber receiving opening 174 of the MPO transceiver 38 until it contacts the fiber ends 39. In some examples the first cleaning tip 198 comprises a tape or ribbon that is advanced to wipe the fiber ends.

After inspecting and cleaning (if necessary) transceiver 38, the transceiver/adapter positioning mechanism 82 described above is operated to position the optical fiber connector 34 along the Z-axis at the optical plane 201 for inspection and cleaning. In the present example and with reference to FIGS. 14 and 16, tool positioning mechanism 190 moves the inspection tool 22 along the X-Y axes to inspect a fiber end 37 on the end face 36 of the optical fiber connector 34 held inside connector adapter 14. FIGS. 14 and 16 depict optical fiber connector 34 as seated in connector adapter 14 (which is not shown for clarity in FIG. 16) along with the probe tip 194 of the inspection tool 22 approaching end face 36.

In one potential advantage of the present disclosure, the tool positioning mechanism 190 is operated to position the probe tip 194 of the inspection tool 22 near the end face 36 of the optical fiber connector 34 to inspect the fiber end without contacting another surface, such as an interior surface of the connector adapter 14. Advantageously, by operating the inspection tool 22 to inspect the fiber end without contacting another surface, system 10 avoids introducing dust or other contaminants through contact with another surface near the fiber end.

In the present example, optical fiber connector 34 is an MPO connector that includes 12 optical fibers and 12 corresponding optical fiber ends 37. As with the MPO transceiver discussed above, in this example the tool positioning mechanism 190 moves the probe tip 194 of the inspection tool 22 along the optical plane in the X-axis direction, stopping at each optical fiber end 37 to inspect the optical fiber end. In some examples, the tool positioning mechanism 190 and/or transceiver/adapter positioning mechanism 82 adjusts the position of the probe tip 194 to capture an accurate image of a fiber end 37.

As described above, in some examples a camera of inspection tool 22 captures one or more images of a fiber end 37 and analyzes the image(s) to detect the core of the fiber end. Once a focused image of the core has been obtained, the image can be partitioned into multiple regions, and each region is processed to detect anomalies that correspond to dirt, dust, or other contaminants or defects. In some examples system 10 runs a classification algorithm to detect the number of anomalies in a specific region of the core, which number is compared to one or more thresholds to determine whether the region passes or fails the inspection. Where all regions pass inspection, cleaning the examined fiber end 37 is not necessary. In other examples, other methods for utilizing an inspection tool to inspect a fiber end 37 for anomalies can be utilized.

Advantageously and in some examples, when the camera of the inspection tool 22 has been properly positioned in the Y-axis direction to focus on one fiber end 37, the inspection tool 22 can be quickly moved laterally in only the X-axis direction to sequentially focus on and inspect each of the other laterally-aligned fiber ends 37. Also as noted above, system 10 can be utilized to perform three-dimensional scanning and inspection of a fiber end.

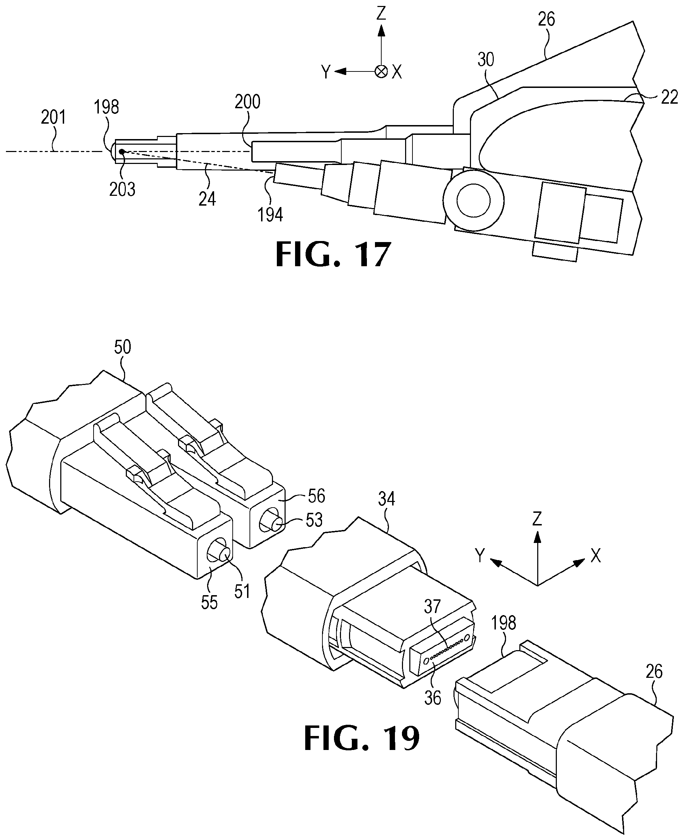

As noted above, some MPO optical fiber connectors have an end face that is angled by 8 degrees relative to the vertical. With reference also to FIG. 17, advantageously the tool tilting mechanism 280 is configured to tilt the inspection tool 22 and probe tip 194 relative to the end face 36 of the optical fiber connector 34, while also maintaining the fixed focal point of the inspection tool camera on the optical plane 201. More particularly, in this example the inspection tool tilting mechanism 280 is controlled to tilt the inspection tool 22 until the optical axis 24 of the inspection tool is perpendicular to the end face 36 of the optical fiber connector 34. With reference to FIG. 17, in this position the optical axis 24 of the inspection tool 22 forms an angle with respect to the optical plane 201 and Y-axis of approximately 8 degrees toward the Z-axis (in a direction opposite to the angle formed by the optical axis when inspecting the MPO optical fiber transceiver 38).

In this manner, light exiting probe tip 194 of the inspection tool 22 impinges upon each fiber end 37 at a 90-degree angle to maximize reflection of light back into the probe tip. Additionally, and as noted above, when the inspection tool tilting mechanism 280 tilts the inspection tool 22, the tool and probe tip 194 are moved in the negative Y-axis direction while being maintained on optical plane 201. To offset this movement and advantageously maintain a fixed distance to a focal point of the inspection tool camera, the tool positioning mechanism 190 moves inspection tool 22 in the positive Y-axis direction by a corresponding distance.

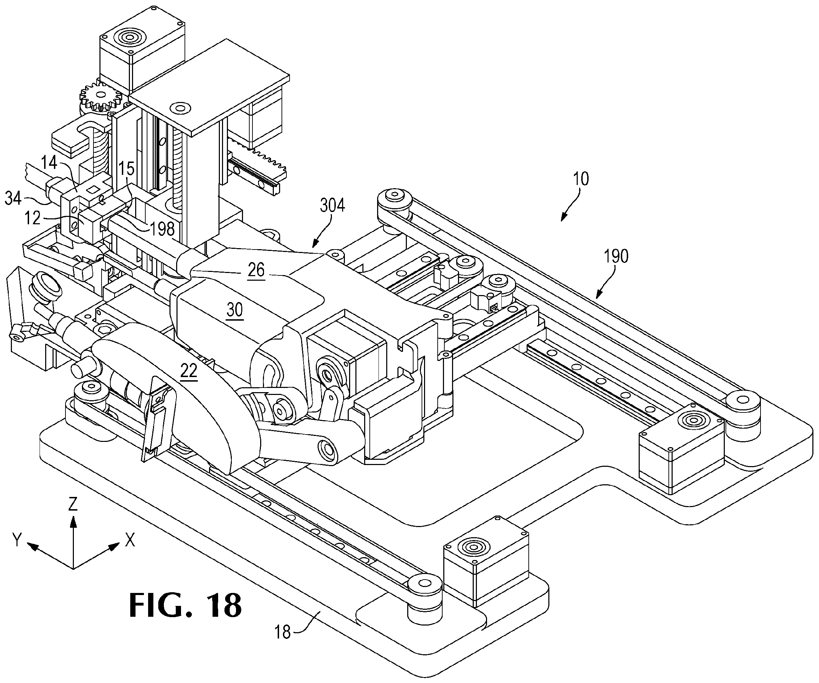

Where inspection of a fiber end determines that cleaning of the fiber end is warranted, the tool positioning mechanism 190 is operated to move the first cleaning tool 26 to contact the fiber end of the optical fiber connector 34. In the present example and as noted above, first cleaning tool 26 is configured to clean fiber ends of MPO optical fiber connectors and transceivers. More particularly and with reference now to FIGS. 18 and 19, the tool positioning mechanism 190 inserts the first cleaning tip 198 of the first cleaning tool 26 into an instrument receiving opening 15 defined in rear side 17 of main body 12 of connector adapter 14 until it contacts the fiber ends 37 (see also FIG. 8).

As noted above, and in one potential advantage of the present disclosure, system 10 is configured to perform inspection and cleaning services for optical fiber connectors and transceivers having a plurality of configurations. Example use cases in which system 10 inspects and cleans LC optical fiber connectors and transceivers will now be described.

With reference to FIG. 2, in some examples an LC optical fiber transceiver 46 receives an LC optical fiber connector 50 in adjacent transceiver fiber receiving openings 48. The LC optical fiber transceiver 46 is then inserted into the transceiver receptacle 42. System 10 then operates the clamp 54 to unplug the LC optical fiber connector 50 from LC optical fiber transceiver 46, insert the optical fiber connector into the connector adapter 14, and rotate the transceiver into the servicing orientation in the same manner as described above.

With the LC optical fiber transceiver 46 positioned in the servicing orientation and in the optical plane 201, tool positioning mechanism 190 moves the inspection tool 22 along the X-Y axes to inspect the two fiber ends on the mating face of the LC optical fiber transceiver 46 held inside transceiver receptacle 42 in the same manner as described above for the fiber ends of the MPO optical fiber transceiver 38. As with inspecting the MPO transceiver 38 described above, advantageously the tool positioning mechanism 190 is operated to position the probe tip 194 of the inspection tool 22 near the mating face of the LC optical fiber transceiver 46 to inspect its two fiber ends without contacting another surface. Advantageously, by operating inspection tool 22 to inspect the fiber ends without contacting another surface, system 10 avoids introducing dust or other contaminants through contact with another surface near the fiber ends. Additionally, the system 10 can be utilized to perform three-dimensional scanning and inspection of an LC transceiver fiber end in the same manner as described above for an MPO transceiver fiber end.

As mating faces of LC optical fiber transceivers are parallel with respect to the vertical (in the present example, the Z-axis), the inspection tool tilting mechanism 280 controls the inspection tool 22 and probe tip 194 in a manner that aligns the optical axis 24 of the inspection tool with the optical plane 201, thereby making the optical axis perpendicular to the mating face of the LC optical fiber transceiver 46. In this manner, light exiting probe tip 194 of the inspection tool 22 impinges upon the two fiber ends at a 90-degree angle to maximize reflection of light back into the probe tip to facilitate accurate imaging of the fiber ends on the mating face.

With reference now to FIGS. 1, 2, and 20, where inspection of a fiber end in an LC optical fiber transceiver determines that cleaning of the fiber end is warranted, the tool positioning mechanism 190 is operated to move the second cleaning tool 30 (configured to clean at least LC transceivers) and sequentially insert the second cleaning tip 200 of the tool into each of the two the transceiver fiber receiving opening 48 of the LC transceiver 46 to contact and clean the two fiber ends inside the transceiver. In some examples the second cleaning tip 200 comprises a thread or ribbon that is advanced to wipe the fiber ends.

After inspecting and cleaning (if necessary) LC optical fiber transceiver 46, the transceiver/adapter positioning mechanism 82 described above is operated to position the connector adapter 14 and LC optical fiber connector 50 along the Z-axis at the optical plane 201 for inspection and cleaning in a similar manner as described above for the MPO optical fiber connector. Tool positioning mechanism 190 moves the inspection tool 22 along the X-Y axes to inspect a first fiber end 51 of the LC optical fiber connector 50 held inside connector adapter 14.

As noted above, advantageously the tool positioning mechanism 190 is operated to position the probe tip 194 of the inspection tool 22 near the first fiber end 51 of the LC optical fiber connector 50 to inspect the fiber end without contacting another surface, such as an interior surface of the connector adapter 14. Advantageously, by operating the inspection tool 22 to inspect the fiber end 51 without contacting another surface, system 10 avoids introducing dust or other contaminants through contact with another surface near the fiber end.

As depicted in FIG. 19, first end face 55 and second end face 56 of LC optical fiber connector 50 are parallel with respect to the vertical (in the present example, the Z-axis). Accordingly and with reference to FIG. 17, the inspection tool tilting mechanism 280 controls the inspection tool 22 and probe tip 194 in a manner that aligns the optical axis 24 of the inspection tool with the optical plane 201 (along the X-Y axes), thereby making the optical axis perpendicular to the end faces of the LC optical fiber connector. In this manner, light exiting probe tip 194 of the inspection tool 22 impinges upon the first fiber end 51 and second fiber end 53 at a 90-degree angle to maximize reflection of light back into the probe tip to facilitate accurate imaging of the fiber ends.

As with the MPO optical fiber connector discussed above, after inspecting the first fiber end 51, in this example the tool positioning mechanism 190 moves the probe tip 194 of the inspection tool 22 along the optical plane in the X-axis direction to inspect the second optical fiber end 53 of the LC optical fiber connector 50. In some examples, the tool positioning mechanism 190 and/or transceiver/adapter positioning mechanism 82 adjusts the position of the probe tip 194 to capture accurate images of the fiber ends.

As described above, a camera of inspection tool 22 captures one or more images of the fiber ends and analyzes the image(s) to detect the cores of the fiber ends. Once a focused image of the core has been obtained, the image can be partitioned into multiple regions, and each region is processed to detect anomalies that correspond to dirt, dust, or other contaminants or defects. In some examples system 10 runs a classification algorithm to detect the number of anomalies in a specific region of the core, which number is compared to one or more thresholds to determine whether the region passes or fails the inspection. Where all regions pass inspection, cleaning an examined fiber end is not necessary. In other examples, other methods for utilizing an inspection tool to inspect a fiber end for anomalies can be utilized.

Advantageously and in some examples, when the camera of the inspection tool 22 has been properly positioned in the Y-axis direction to focus on one fiber end, the inspection tool 22 can be quickly moved laterally in only the X-axis direction to sequentially focus on and inspect the other fiber end. Also as noted above, system 10 can be utilized to perform three-dimensional scanning and inspection of a fiber end.

In another potential advantage of the present disclosure, system 10 can also utilize the first cleaning tool 26 to clean the first and second fiber ends 51, 53 of an LC optical fiber connector, thereby potentially eliminating the requirement for a second configuration of cleaning tool, such as use cases in which cleaning an LC optical fiber transceiver is not required. With reference again to FIGS. 18 and 19, where inspection of a fiber end determines that cleaning of the fiber end is warranted, the tool positioning mechanism 190 is operated to move the first cleaning tool 26 to contact the first fiber end 51 and second fiber end 53 of the LC optical fiber transceiver 50. More particularly, the tool positioning mechanism 190 inserts the first cleaning tip 198 of the first cleaning tool 26 into the instrument receiving opening 15 defined the rear side 17 of main body 12 of connector adapter 14 (See FIGS. 8 and 19) until it contacts the first fiber end 51 and second fiber end 53.

Additionally, and in another potential advantage of the present disclosure, by utilizing the first cleaning tool 26 that includes a wider first cleaning tip 198 that can contact and clean both first fiber end 51 and second fiber end 53 simultaneously, system 10 can clean LC optical fiber connectors much faster than other methods that use the second cleaning tool 30 and require separate cleaning operations for each of the first fiber end and second fiber end.

After system 10 has inspected and/or cleaned one or more optical fiber components, the transceiver rotating mechanism 172 is operated to rotate the optical fiber transceiver from the servicing orientation to the loading orientation. In use cases where an optical fiber connector is seated in the connector adapter 14, the clamp 54 is then operated to remove the optical fiber connector from the connector adapter 14 and to insert the optical fiber connector into the optical fiber transceiver. The optical fiber transceiver can then be removed from the transceiver receptacle 42.

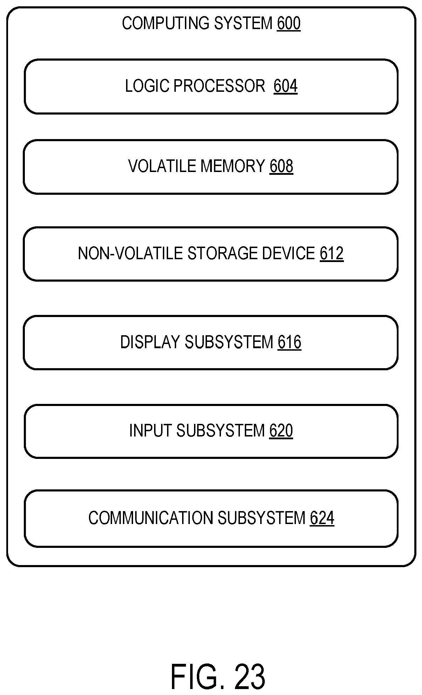

As noted above, system 10 also includes an identification camera 52 positioned to capture images of an optical fiber connector seated in the connector adapter 14 and/or an optical fiber transceiver seated in the transceiver receptacle 42. With reference again to FIG. 1, system 10 also includes a processor 338 and memory 342 storing instructions executable by the processor to use at least one image from the identification camera 52 to identify a configuration of the optical fiber connector and/or a configuration of the optical fiber transceiver, such as via image classification algorithms. Additional details regarding processor 338 and memory 142 are described further below with reference to FIG. 23. Using the identified configuration of the optical fiber connector and/or the identified configuration of the optical fiber transceiver, a plurality of coordinates are retrieved from the memory and utilized to guide movements of the moveable clamp, inspection tool 22, and one or both cleaning tools 26 and 30. In the present example, to facilitate capturing more detailed and clear images, system 10 also includes a light source 57 that is positioned to illuminate an optical fiber connector inserted into the connector adapter 14 and/or an optical fiber transceiver seated in the transceiver receptacle 42 (see also FIG. 7).

In some examples, the instructions are executable by processor 338 to use at least one image from the identification camera 52 to identify a configuration of the optical fiber transceiver. The identified configuration of the optical fiber transceiver is used to retrieve a plurality of coordinates from memory 342. A transceiver inspection portion of the plurality of coordinates are used to guide the inspection tool 22 to a fiber end of the optical fiber transceiver. A transceiver cleaning portion of the plurality of coordinates is then used to guide one of the cleaning tools to contact and clean the fiber end of the optical fiber transceiver as described above.

In some examples, the instructions are executable by processor 338 to use at least one image from the identification camera 52 to identify a configuration of an optical fiber connector seated in the connector adapter 14. The identified configuration of the optical fiber connector is used to retrieve a plurality of coordinates from memory 342. A connector inspection portion of the plurality of coordinates are used to guide the inspection tool 22 to a fiber end of the optical fiber connector. A connector cleaning portion of the plurality of coordinates is then used to guide one of the cleaning tools to contact and clean the fiber end of the optical fiber connector as described above.

In some examples, the identified configuration of the optical fiber connector seated in the connector adapter 14 and/or the identified configuration of the optical fiber transceiver is used to retrieve a clamp portion of coordinates from memory. The clamp portion of coordinates are used to guide the clamp 54 to remove an optical fiber connector from the connector adapter 14 and insert the optical fiber connector into a transceiver. After inspection and/or cleaning, the clamp portion of coordinates are used to guide the clamp 54 to remove the optical fiber connector from the transceiver and reseat the optical fiber connector in the connector adapter 14.

In some examples, images and other data collected by identification camera 52 and/or during inspection of various optical fiber transceivers and optical fiber connectors can be utilized for a variety of purposes, such as reach diagnostics. Examples include determining causes of failure and developing targeted maintenance and repair plans. For example, images and related data of different types of anomalies, failures, and other aspects of fiber ends that are obtained during inspection processes can be collected. In some examples such images and data are associated with a particular configuration of the optical fiber component that is inspected. Machine learning algorithms can be trained with such images and data and utilized to identify problems during inspections of optical fiber components, and to proactively maintain such components and implement preventative actions that prevent failures from occurring, thereby improving efficiencies and up time of the components. In some examples, such images and data can be analyzed to correlate different failure modes and/or different features to consequences in the field, and to create a closed loop process of inspection and analysis of optical fiber components.

In the present example, system 10 is contained within an enclosure that can take any suitable form. FIG. 11 shows a partial view of an enclosure 350 that contains system 10. Enclosure 350 includes an aperture 352 configured to receive and secure a cleaning fluid dispenser 354. When inserted in aperture 352, a dispensing end 356 of cleaning fluid dispenser 354 is positioned on optical plane 201. Advantageously, tool positioning mechanism 190 can move either the first cleaning tip 198 of the first cleaning tool 26 or the second cleaning tip 200 of the second cleaning tool 30 into contact with the dispensing end 356 of the cleaning fluid dispenser 354 to apply cleaning fluid to the cleaning tip. For example, where a standard cleaning operation does sufficiently clean an optical fiber core, the cleaning fluid dispenser 354 can deposit a small amount of solvent cleaning fluid onto the tip of one of the cleaning tools, and the "wetted" cleaning tool can be used in another cleaning operation.

While the present examples disclose inspecting and cleaning a transceiver followed by inspecting and cleaning the optical fiber connector, in different examples the system 10 can inspect and clean an optical fiber connector followed by inspecting and cleaning an optical fiber transceiver. In some examples, a transceiver that does not contain an optical fiber connector can be inserted into transceiver receptacle 42, and system 10 can proceed to inspect and clean (if necessary) the transceiver. In some examples, only an optical fiber connector is inserted into the connector adapter 14, with no transceiver seated in the transceiver receptacle 42. In these examples system 10 proceeds to inspect and clean (if necessary) the optical fiber connector. In some examples, system 10 utilizes a single cleaning tool having a configuration primarily designed for a selected configuration of optical fiber connector and corresponding transceiver.

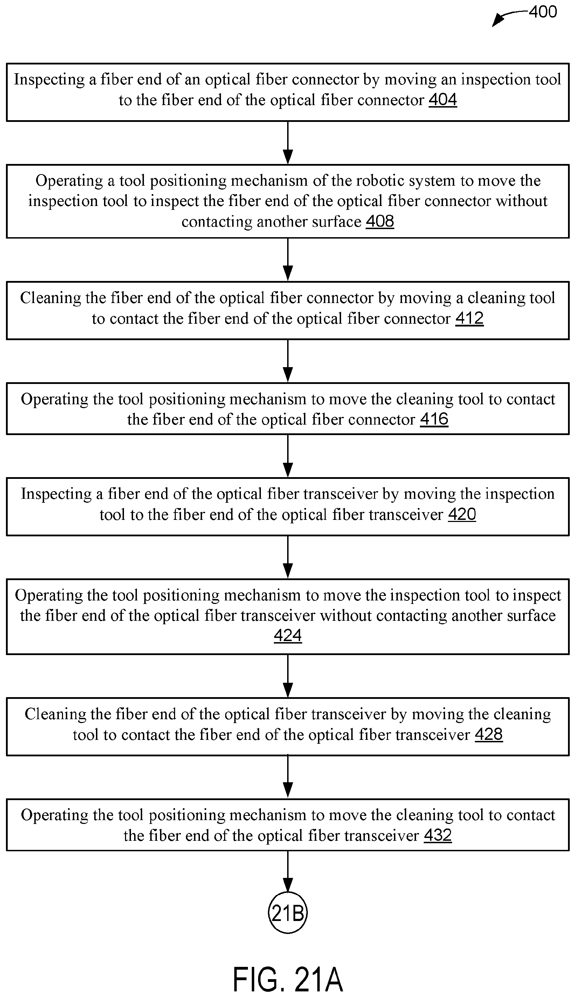

With reference now to FIGS. 21A-21C, a flow diagram is provided depicting an example method 400 for operating a robotic system to perform inspection and cleaning of an optical fiber connector and an optical fiber transceiver. The following description of method 400 is provided with reference to the configurations and components described herein and shown in FIGS. 1-20. In other examples, method 400 can be performed with other configurations of robotic systems using other suitable components.

The following description of method 400 is provided by way of example and is not meant to be limiting. Therefore, it is to be understood that method 400 may include additional and/or alternative steps relative to those illustrated in FIGS. 21A-21C. Further, it is to be understood that the steps of method 400 may be performed in any suitable order. Further still, it is to be understood that one or more steps may be omitted from method 400 without departing from the scope of this disclosure. It will also be appreciated that method 400 also may be performed in other contexts using other suitable components.

At 404 method 400 includes inspecting a fiber end of the optical fiber connector by moving an inspection tool to the fiber end of the optical fiber connector. At 408 method 400 includes operating a tool positioning mechanism of the robotic system to move the inspection tool to inspect the fiber end of the optical fiber connector without contacting another surface. At 412 method 400 includes cleaning the fiber end of the optical fiber connector by moving a cleaning tool to contact the fiber end of the optical fiber connector. At 416 method 400 includes operating the tool positioning mechanism to move the cleaning tool to contact the fiber end of the optical fiber connector.

At 420 method 400 includes inspecting a fiber end of the optical fiber transceiver by moving the inspection tool to the fiber end of the optical fiber transceiver. At 424 method 400 includes operating the tool positioning mechanism to move the inspection tool to inspect the fiber end of the optical fiber transceiver without contacting another surface. At 428 method 400 includes cleaning the fiber end of the optical fiber transceiver by moving the cleaning tool to contact the fiber end of the optical fiber transceiver. At 432 method 400 includes operating the tool positioning mechanism to move the cleaning tool to contact the fiber end of the optical fiber transceiver.

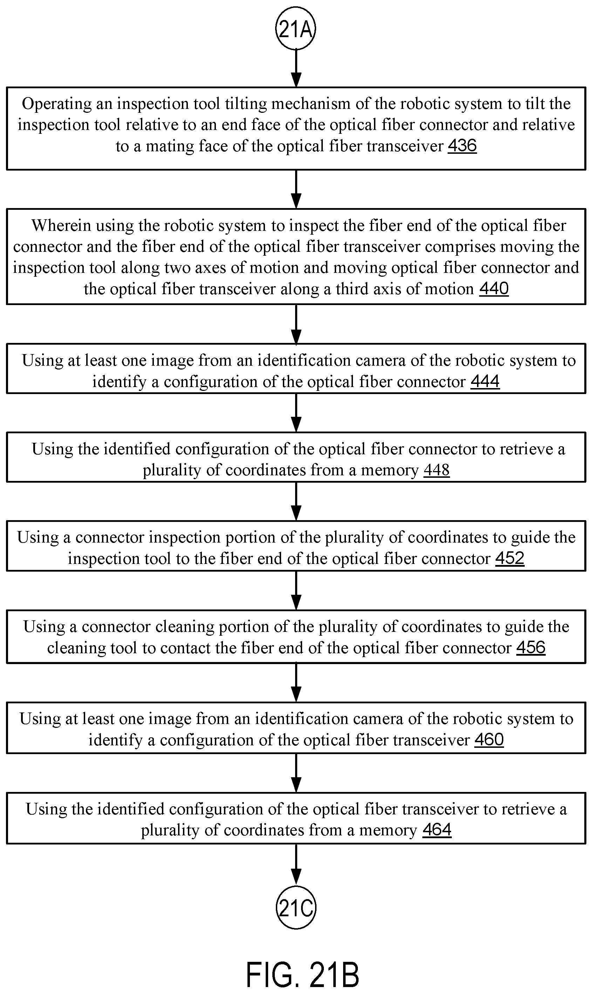

With reference now to FIG. 21B, at 436 method 400 includes operating an inspection tool tilting mechanism of the robotic system to tilt the inspection tool relative to an end face of the optical fiber connector and relative to a mating face of the optical fiber transceiver. At 440 method 400 includes, wherein using the robotic system to inspect the fiber end of the optical fiber connector and the fiber end of the optical fiber transceiver comprises moving the inspection tool along two axes of motion and moving the optical fiber connector and the optical fiber transceiver along a third axis of motion.

At 444 method 400 includes using at least one image from an identification camera of the robotic system to identify a configuration of the optical fiber connector. At 448 method 400 includes using the identified configuration of the optical fiber connector to retrieve a plurality of coordinates from a memory. At 452 method 400 includes using a connector inspection portion of the plurality of coordinates to guide the inspection tool to the fiber end of the optical fiber connector. At 456 method 400 includes using a connector cleaning portion of the plurality of coordinates to guide the cleaning tool to contact the fiber end of the optical fiber connector.

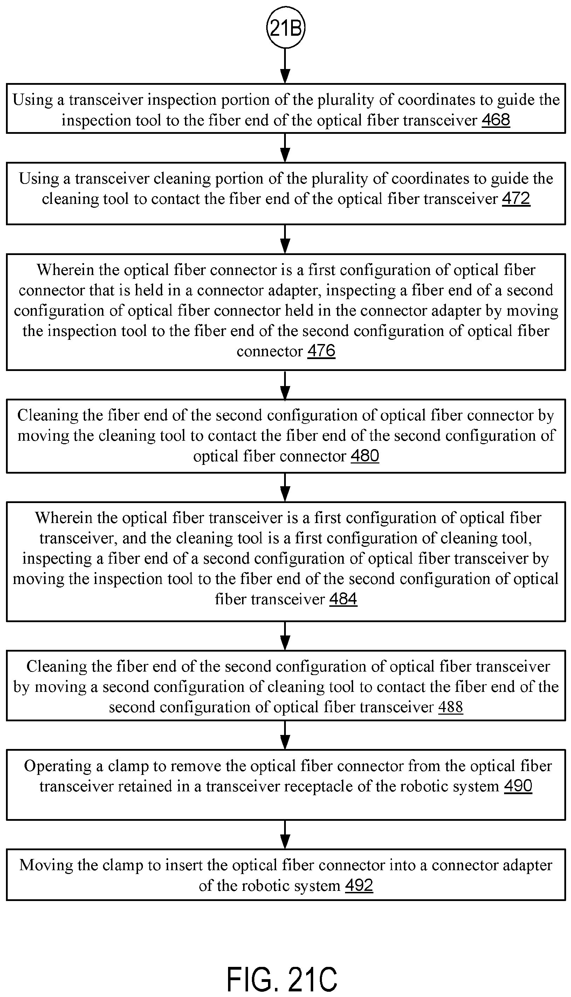

At 460 method 400 includes using at least one image from the identification camera to identify a configuration of the optical fiber transceiver. At 464 method 400 includes using the identified configuration of the optical fiber transceiver to retrieve a plurality of coordinates from a memory. With reference now to FIG. 21C, at 468 method 400 includes using a transceiver inspection portion of the plurality of coordinates to guide the inspection tool to the fiber end of the optical fiber transceiver. At 472 method 400 includes using a transceiver cleaning portion of the plurality of coordinates to guide the cleaning tool to contact the fiber end of the optical fiber transceiver.

At 476 method 400 includes, wherein the optical fiber connector is a first configuration of an optical fiber connector that is held in a connector adapter of the robotic system, inspecting a fiber end of a second configuration of an optical fiber connector that is held in the connector adapter of the robotic system by moving the inspection tool to the fiber end of the second configuration of optical fiber connector. At 480 method 400 includes cleaning the fiber end of the second configuration of optical fiber connector by moving the cleaning tool to contact the fiber end of the second configuration of optical fiber connector. At 484 method 400 includes, wherein the optical fiber transceiver is a first configuration of optical fiber transceiver, and the cleaning tool is a first configuration of a cleaning tool, inspecting a fiber end of a second configuration of an optical fiber transceiver by moving the inspection tool to the fiber end of the second configuration of optical fiber transceiver. At 488 method 400 includes cleaning the fiber end of the second configuration of optical fiber transceiver by moving a second configuration of a cleaning tool to contact the fiber end of the second configuration of optical fiber transceiver.

At 490 method 400 includes operating a clamp of the robotic system to remove the optical fiber connector from the optical fiber transceiver retained in a transceiver receptacle of the robotic system. At 492 method 400 includes moving the clamp to insert the optical fiber connector into a connector adapter of the robotic system.

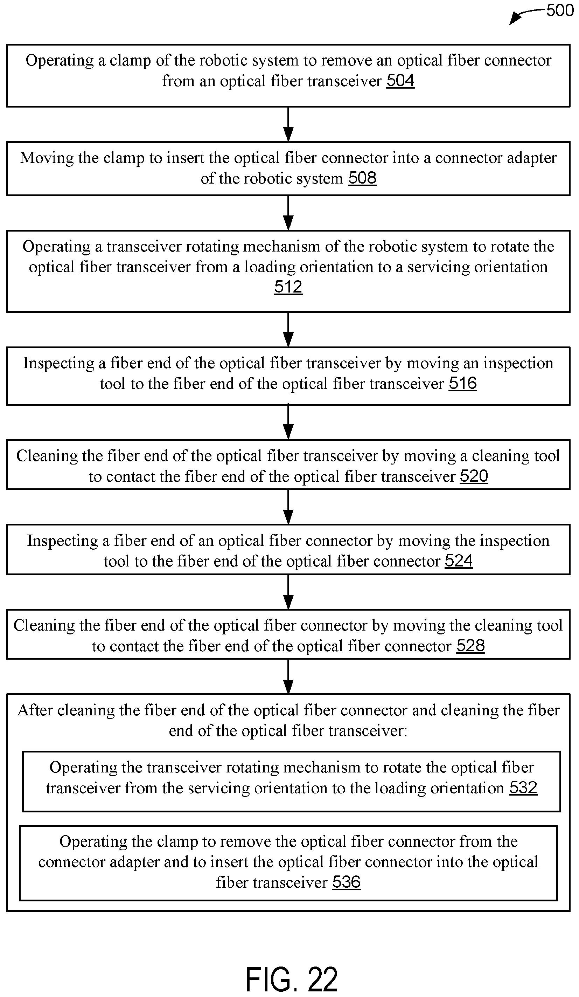

With reference now to FIG. 22, a flow diagram is provided depicting another example of a method 500 for operating a robotic system to perform inspection and cleaning of optical fiber components. The following description of method 500 is provided with reference to the configurations and components described herein and shown in FIGS. 1-20. In other examples, method 500 can be performed with other configurations of robotic systems using other suitable components.

The following description of method 500 is provided by way of example and is not meant to be limiting. Therefore, it is to be understood that method 500 may include additional and/or alternative steps relative to those illustrated in FIG. 22. Further, it is to be understood that the steps of method 500 may be performed in any suitable order. Further still, it is to be understood that one or more steps may be omitted from method 500 without departing from the scope of this disclosure. It will also be appreciated that method 500 also may be performed in other contexts using other suitable components.

At 504 method 500 includes operating a clamp of the robotic system to remove an optical fiber connector from an optical fiber transceiver. At 508 method 500 includes moving the clamp to insert the optical fiber connector into a connector adapter of the robotic system. At 512 method 500 includes operating a transceiver rotating mechanism of the robotic system to rotate the optical fiber transceiver from a loading orientation to a servicing orientation. At 516 method 500 includes inspecting a fiber end of the optical fiber transceiver by moving an inspection tool to the fiber end of the optical fiber transceiver.

At 520 method 500 includes cleaning the fiber end of the optical fiber transceiver by moving a cleaning tool to contact the fiber end of the optical fiber transceiver. At 524 method 500 includes inspecting a fiber end of an optical fiber connector by moving the inspection tool to the fiber end of the optical fiber connector. At 528 method 500 includes cleaning the fiber end of the optical fiber connector by moving the cleaning tool to contact the fiber end of the optical fiber connector. Method 500 also includes, after cleaning the fiber end of the optical fiber connector and cleaning the fiber end of the optical fiber transceiver: at 532 operating the transceiver rotating mechanism to rotate the optical fiber transceiver from the servicing orientation to the loading orientation; and at 536 operating the clamp to remove the optical fiber connector from the connector adapter and to insert the optical fiber connector into the optical fiber transceiver.

In some embodiments, one or more aspects of the methods and processes described herein may be tied to a computing system of one or more computing devices. In particular, such methods and processes may be implemented as a computer-application program or service, an application-programming interface (API), a library, and/or other computer-program product.

FIG. 23 schematically shows a simplified representation of a computing system 600 configured to provide any to all of the compute functionality described herein. Computing system 600 may take the form of one or more embedded computing devices, personal computers, network-accessible server computers, tablet computers, mobile computing devices, mobile communication devices (e.g., smart phone), virtual/augmented/mixed reality computing devices, wearable computing devices, Internet of Things (IoT) devices, and/or other computing devices. The processor 338 and memory 342 described above may comprise computing system 600 or one or more aspects of computing system 600.

Computing system 600 includes a logic processor 604, volatile memory 608, and a non-volatile storage device 612. Computing system 600 may optionally include a display subsystem 616, input subsystem 620, communication subsystem 624, and/or other components not shown in FIG. 23.

Logic processor 604 includes one or more physical devices configured to execute instructions. For example, the logic processor may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic processor 604 may include one or more physical processors (hardware) configured to execute software instructions. Additionally or alternatively, the logic processor may include one or more hardware logic circuits or firmware devices configured to execute hardware-implemented logic or firmware instructions. Processors of the logic processor 604 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. In such a case, these virtualized aspects are run on different physical logic processors of various different machines, it will be understood.

Volatile memory 608 may include physical devices that include random access memory. Volatile memory 608 is typically utilized by logic processor 604 to temporarily store information during processing of software instructions. It will be appreciated that volatile memory 608 typically does not continue to store instructions when power is cut to the volatile memory 608.

Non-volatile storage device 612 includes one or more physical devices configured to hold instructions executable by the logic processors to implement the methods and processes described herein. When such methods and processes are implemented, the state of non-volatile storage device 612 may be transformed-e.g., to hold different data.

Non-volatile storage device 612 may include physical devices that are removable and/or built-in. Non-volatile storage device 612 may include optical memory (e.g., CD, DVD, HD-DVD, Blu-Ray Disc, etc.), semiconductor memory (e.g., ROM, EPROM, EEPROM, FLASH memory, etc.), and/or magnetic memory (e.g., hard-disk drive, floppy-disk drive, tape drive, MRAM, etc.), or other mass storage device technology. Non-volatile storage device 612 may include nonvolatile, dynamic, static, read/write, read-only, sequential-access, location-addressable, file-addressable, and/or content-addressable devices. It will be appreciated that non-volatile storage device 612 is configured to hold instructions even when power is cut to the non-volatile storage device 612.

Aspects of logic processor 604, volatile memory 608, and non-volatile storage device 612 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), microcontroller units (MCUs), and complex programmable logic devices (CPLDs), for example.

When included, display subsystem 616 may be used to present a visual representation of data held by non-volatile storage device 612. As the herein described methods and processes change the data held by the non-volatile storage device, and thus transform the state of the non-volatile storage device, the state of display subsystem 616 may likewise be transformed to visually represent changes in the underlying data. Display subsystem 616 may include one or more display devices utilizing virtually any type of technology. Such display devices may be combined with logic processor 604, volatile memory 608, and/or non-volatile storage device 612 in a shared enclosure, or such display devices may be peripheral display devices.

When included, input subsystem 620 may comprise or interface with one or more user-input devices such as a stylus, touchpad, keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 624 may be configured to communicatively couple various computing devices described herein with each other, and with other devices. Communication subsystem 624 may include wired and/or wireless communication devices compatible with one or more different communication protocols. As non-limiting examples, the communication subsystem may be configured for communication via a wireless telephone network, or a wired or wireless local- or wide-area network, such as a HDMI over Wi-Fi connection. In some embodiments, the communication subsystem may allow computing system 600 to send and/or receive messages to and/or from other devices via a network such as the Internet.

The following paragraphs provide additional support for the claims of the subject application. One aspect provides a robotic system for automated inspection and cleaning of optical fiber components, the robotic system comprising: a transceiver receptacle moveably secured to a chassis and configured to removably retain an optical fiber transceiver; a connector adapter moveably secured to the chassis and configured to removably retain an optical fiber connector; an inspection tool moveably secured to the chassis and configured to inspect a fiber end of the optical fiber connector and a fiber end of the optical fiber transceiver; and a cleaning tool moveably secured to the chassis and configured to clean the fiber end of the optical fiber connector and the fiber end of the optical fiber transceiver. The robotic system may additionally or alternatively include a clamp moveably secured to the chassis and configured to remove the optical fiber connector from the optical fiber transceiver retained in the transceiver receptacle and insert the optical fiber connector into the connector adapter. The robotic system may additionally or alternatively include, wherein the connector adapter is configured to receive a plurality of configurations of optical fiber connectors, and the transceiver receptacle is configured to receive a plurality of configurations of optical fiber transceivers. The robotic system may additionally or alternatively include an identification camera positioned to capture images of the optical fiber connector in the connector adapter and the optical fiber transceiver. The robotic system may additionally or alternatively include, a processor; and a memory storing instructions executable by the processor to: use at least one image from the identification camera to identify a configuration of the optical fiber connector and a configuration of the optical fiber transceiver; use the identified configuration of the optical fiber connector and the identified configuration of the optical fiber transceiver to retrieve a plurality of coordinates from the memory; and use portions of the plurality of coordinates to guide movements of the clamp, the inspection tool, and the cleaning tool. The robotic system may additionally or alternatively include, an inspection tool tilting mechanism connected to the inspection tool and configured to tilt the inspection tool while maintaining a focal point of the inspection tool on an optical plane. The robotic system may additionally or alternatively include, wherein the inspection tool and the cleaning tool are mounted to a tool positioning mechanism that restricts the inspection tool and the cleaning tool to movement in a first direction and a second direction orthogonal to the first direction along the optical plane. The robotic system may additionally or alternatively include a transceiver rotating mechanism configured to rotate the optical fiber transceiver from a loading orientation to a servicing orientation. The robotic system may additionally or alternatively include, wherein the cleaning tool is a first configuration of a cleaning tool, the optical fiber connector is a first configuration of an optical fiber connector, and the optical fiber transceiver is a first configuration of an optical fiber transceiver, the system further comprising a second configuration of a cleaning tool moveably secured to the chassis and configured to clean a fiber end of a second configuration of an optical fiber transceiver.

Another aspect provides a method for operating a robotic system to perform inspection and cleaning of an optical fiber connector and an optical fiber transceiver, the method comprising: inspecting a fiber end of the optical fiber connector by moving an inspection tool of the robotic system to the fiber end of the optical fiber connector; cleaning the fiber end of the optical fiber connector by moving a cleaning tool of the robotic system to contact the fiber end of the optical fiber connector; inspecting a fiber end of the optical fiber transceiver by moving the inspection tool to the fiber end of the optical fiber transceiver; and cleaning the fiber end of the optical fiber transceiver by moving the cleaning tool to contact the fiber end of the optical fiber transceiver. The method may additionally or alternatively include operating a tool positioning mechanism of the robotic system to move the inspection tool to inspect the fiber end of the optical fiber connector without contacting another surface; and operating the tool positioning mechanism to move the cleaning tool to contact the fiber end of the optical fiber connector. The method may additionally or alternatively include operating the tool positioning mechanism of the robotic system to move the inspection tool to inspect the fiber end of the optical fiber transceiver without contacting another surface; and operating the tool positioning mechanism to move the cleaning tool to contact the fiber end of the optical fiber transceiver. The method may additionally or alternatively include operating an inspection tool tilting mechanism of the robotic system to tilt the inspection tool relative to an end face of the optical fiber connector and relative to a mating face of the optical fiber transceiver. The method may additionally or alternatively include, wherein using the robotic system to inspect the fiber end of the optical fiber connector and the fiber end of the optical fiber transceiver comprises moving the inspection tool along two axes of motion and moving the optical fiber connector and the optical fiber transceiver along a third axis of motion. The method may additionally or alternatively include using at least one image from an identification camera of the robotic system to identify a configuration of the optical fiber connector; using the identified configuration of the optical fiber connector to retrieve a plurality of coordinates from a memory; using a connector inspection portion of the plurality of coordinates to guide the inspection tool to the fiber end of the optical fiber connector; and using a connector cleaning portion of the plurality of coordinates to guide the cleaning tool to contact the fiber end of the optical fiber connector. The method may additionally or alternatively include using at least one image from an identification camera of the robotic system to identify a configuration of the optical fiber transceiver; using the identified configuration of the optical fiber transceiver to retrieve a plurality of coordinates from a memory; using a transceiver inspection portion of the plurality of coordinates to guide the inspection tool to the fiber end of the optical fiber transceiver; and using a transceiver cleaning portion of the plurality of coordinates to guide the cleaning tool to contact the fiber end of the optical fiber transceiver. The method may additionally or alternatively include wherein the optical fiber connector is a first configuration of an optical fiber connector that is held in a connector adapter of the robotic system, the method further comprising: inspecting a fiber end of a second configuration of an optical fiber connector that is held in the connector adapter of the robotic system by moving the inspection tool to the fiber end of the second configuration of optical fiber connector; and cleaning the fiber end of the second configuration of optical fiber connector by moving the cleaning tool to contact the fiber end of the second configuration of optical fiber connector. The method may additionally or alternatively include, wherein the optical fiber transceiver is a first configuration of optical fiber transceiver, and the cleaning tool is a first configuration of a cleaning tool, the method further comprising: inspecting a fiber end of a second configuration of an optical fiber transceiver by moving the inspection tool to the fiber end of the second configuration of optical fiber transceiver; and cleaning the fiber end of the second configuration of optical fiber transceiver by moving a second configuration of a cleaning tool to contact the fiber end of the second configuration of optical fiber transceiver. The method may additionally or alternatively include operating a clamp of the robotic system to remove the optical fiber connector from the optical fiber transceiver retained in a transceiver receptacle of the robotic system; and moving the clamp to insert the optical fiber connector into a connector adapter of the robotic system.

Another aspect provides a method for operating a robotic system to perform inspection and cleaning of optical fiber components, the method comprising: operating a clamp of the robotic system to remove an optical fiber connector from an optical fiber transceiver; moving the clamp to insert the optical fiber connector into a connector adapter of the robotic system; operating a transceiver rotating mechanism of the robotic system to rotate the optical fiber transceiver from a loading orientation to a servicing orientation; inspecting a fiber end of the optical fiber transceiver by moving an inspection tool to the fiber end of the optical fiber transceiver; cleaning the fiber end of the optical fiber transceiver by moving a cleaning tool to contact the fiber end of the optical fiber transceiver; inspecting a fiber end of the optical fiber connector by moving the inspection tool to the fiber end of the optical fiber connector; cleaning the fiber end of the optical fiber connector by moving the cleaning tool to contact the fiber end of the optical fiber connector; and after cleaning the fiber end of the optical fiber connector and cleaning the fiber end of the optical fiber transceiver: operating the transceiver rotating mechanism to rotate the optical fiber transceiver from the servicing orientation to the loading orientation; and operating the clamp to remove the optical fiber connector from the connector adapter and to insert the optical fiber connector into the optical fiber transceiver.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A robotic system (10) for automated inspection and cleaning of optical fiber components, the robotic system (10) comprising:
a transceiver receptacle (42) moveably secured to a chassis (18) and configured to removably retain an optical fiber transceiver (38,46);
a connector adapter (14) moveably secured to the chassis (18) and configured to removably retain an optical fiber connector (34,50);
an inspection tool (22) moveably secured to the chassis (18) and configured to inspect a fiber end (37, 51, 53) of the optical fiber connector (34, 50) and a fiber end (39) of the optical fiber transceiver (38, 46); and
a cleaning tool (30) moveably secured to the chassis (18) and configured to clean the fiber end (37, 51, 53) of the optical fiber connector and the fiber end (39) of the optical fiber transceiver (38, 46).

2. The robotic system (10) of claim 1, further comprising a clamp (54) moveably secured to the chassis (18) and configured to remove the optical fiber connector (34, 50) from the optical fiber transceiver (38, 46) retained in the transceiver receptacle (42) and insert the optical fiber connector (34, 50) into the connector adapter (14).

3. The robotic system (10) of claims 1 or 2, wherein the connector adapter (14) is configured to receive a plurality of configurations of optical fiber connectors, and the transceiver receptacle (42) is configured to receive a plurality of configurations of optical fiber transceivers.

4. The robotic system (10) of claims 1, 2 or 3, further comprising an identification camera (52) positioned to capture images of the optical fiber connector (34, 50) in the connector adapter (14) and the optical fiber transceiver (38, 46); and optionally:
a processor (604); and
a memory (608) storing instructions executable by the processor (604) to:
use at least one image from the identification camera (52) to identify a configuration of the optical fiber connector (34,50) and a configuration of the optical fiber transceiver (38, 46);
use the identified configuration of the optical fiber connector (34, 50) and the identified configuration of the optical fiber transceiver (38, 46) to retrieve a plurality of coordinates from the memory (608); and
use portions of the plurality of coordinates to guide movements of the clamp (54), the inspection tool (22), and the cleaning tool (30).

5. The robotic system (10) of any preceding claim, further comprising an inspection tool tilting mechanism (280) connected to the inspection tool (22) and configured to tilt the inspection tool (22) while maintaining a focal point of the inspection tool (22) on an optical plane;
wherein the inspection tool (22) and the cleaning tool (30) are optionally mounted to a tool positioning mechanism (82) that restricts the inspection tool (22) and the cleaning tool (30) to movement in a first direction and a second direction orthogonal to the first direction along the optical plane.

6. The robotic system (10) of any preceding claim, further comprising a transceiver rotating mechanism (172) configured to rotate the optical fiber transceiver (38,46) from a loading orientation to a servicing orientation.

7. The robotic system (10) of cany preceding claim, wherein the cleaning tool (30) is a first configuration of a cleaning tool (30), the optical fiber connector (34,50) is a first configuration of an optical fiber connector, and the optical fiber transceiver (38, 46) is a first configuration of an optical fiber transceiver, the system (10) further comprising a second configuration of a cleaning tool moveably secured to the chassis (18) and configured to clean a fiber end of a second configuration of an optical fiber transceiver.

8. A method for operating a robotic system (10) to perform inspection and cleaning of an optical fiber connector (34, 50) and an optical fiber transceiver (38, 46) , the method comprising:
inspecting a fiber end (37, 51, 53) of the optical fiber connector by moving an inspection tool (22) of the robotic system (10) to the fiber end (37, 51, 53) of the optical fiber connector;
cleaning the fiber end (39) of the optical fiber connector by moving a cleaning tool (30) of the robotic system to contact the fiber end (37, 51, 53) of the optical fiber connector;
inspecting a fiber end (39) of the optical fiber transceiver by moving the inspection tool (22) to the fiber end (39) of the optical fiber transceiver; and
cleaning the fiber end (39) of the optical fiber transceiver by moving the cleaning tool (30) to contact the fiber end (39) of the optical fiber transceiver.

9. The method of claim 8, further comprising:
operating a tool positioning mechanism (82) of the robotic system (10) to move the inspection tool (22) to inspect the fiber end (37, 51, 53) of the optical fiber connector without contacting another surface;
operating the tool positioning mechanism (82) to move the cleaning tool (30) to contact the fiber end (37, 51, 53) of the optical fiber connector; and optionally:
operating the tool positioning mechanism (82) of the robotic system to move the inspection tool (22) to inspect the fiber end (39) of the optical fiber transceiver without contacting another surface; and
operating the tool positioning mechanism (82) to move the cleaning tool (30) to contact the fiber end (39) of the optical fiber transceiver.

10. The method of claims 8 or 9, further comprising operating an inspection tool tilting mechanism (280) of the robotic system to tilt the inspection tool (22) relative to an end face of the optical fiber connector (34, 50) and relative to a mating face of the optical fiber transceiver (38, 46);
wherein using the robotic system (10) to inspect the fiber end (37, 51, 53) of the optical fiber connector and the fiber end (39) of the optical fiber transceiver optionally comprises moving the inspection tool (22) along two axes of motion and moving the optical fiber connector (34, 50) and the optical fiber transceiver (38, 46) along a third axis of motion.

11. The method of claim 8, 9 or 10, further comprising:
using at least one image from an identification camera (52) of the robotic system to identify a configuration of the optical fiber connector;
using the identified configuration of the optical fiber connector to retrieve a plurality of coordinates from a memory (608);
using a connector inspection portion of the plurality of coordinates to guide the inspection tool (22) to the fiber end (39) of the optical fiber connector; and
using a connector cleaning portion of the plurality of coordinates to guide the cleaning tool (30) to contact the fiber end (39) of the optical fiber connector.

12. The method of any of claims 8 to 11, further comprising:
using at least one image from an identification camera (52) of the robotic system to identify a configuration of the optical fiber transceiver;
using the identified configuration of the optical fiber transceiver to retrieve a plurality of coordinates from a memory (608);
using a transceiver inspection portion of the plurality of coordinates to guide the inspection tool (22) to the fiber end (39) of the optical fiber transceiver; and
using a transceiver cleaning portion of the plurality of coordinates to guide the cleaning tool (30) to contact the fiber end (39) of the optical fiber transceiver.

13. The method of any of claims 8 to 12, wherein the optical fiber connector (34, 50) is a first configuration of an optical fiber connector that is held in a connector adapter (14) of the robotic system (10), the method further comprising:
inspecting a fiber end of a second configuration of an optical fiber connector that is held in the connector adapter (14) of the robotic system by moving the inspection tool (22) to the fiber end of the second configuration of optical fiber connector; and
cleaning the fiber end of the second configuration of optical fiber connector by moving the cleaning tool (30) to contact the fiber end of the second configuration of optical fiber connector.

14. The method of any of claims 8 to 13, wherein the optical fiber transceiver (38, 46) is a first configuration of optical fiber transceiver, and the cleaning tool (30) is a first configuration of a cleaning tool, the method further comprising:
inspecting a fiber end of a second configuration of an optical fiber transceiver by moving the inspection tool (22) to the fiber end of the second configuration of optical fiber transceiver; and
cleaning the fiber end of the second configuration of optical fiber transceiver by moving a second configuration of a cleaning tool to contact the fiber end of the second configuration of optical fiber transceiver.

15. The method of any of claims 8 to 14, further comprising:
operating a clamp (54) of the robotic system to remove the optical fiber connector (34, 50) from the optical fiber transceiver (38, 46) retained in a transceiver receptacle (42) of the robotic system; and
moving the clamp (54) to insert the optical fiber connector (34, 50) into a connector adapter of the robotic system
